# EUROPÄISCHE PATENTSCHRIFT

(11) **EP 1 397 730 B1**
(45) Veröffentlichungstag und Bekanntmachung des Hinweises auf die Patenterteilung: **31.08.2005**
(21) Anmeldenummer: 02740674.3
(22) Anmeldetag: 31.05.2002
(51) Int. Cl.: G05B 19/404

(54) **VERFAHREN ZUR ERMITTLUNG VON AUSWIRKUNGEN VON KONSTRUKTIONSENTSCHEIDUNGEN**
METHOD FOR DETERMINING THE EFFECTS OF MANUFACTURING DECISIONS
PROCEDE PERMETTANT DE DETERMINER LES EFFETS DE DECISIONS DE CONCEPTION

(30) Priorität: 20.06.2001 DE 10129676
(43) Veröffentlichungstag der Anmeldung: 17.03.2004
(73) Patentinhaber: DaimlerChrysler AG, 70567 Stuttgart (DE)
(72) Erfinder: BOHN, Martin, 71120 Grafenau (DE); HERKENRATH, Thomas, 72813 St.Johann (DE); PIETSCH, Andreas, 71083 Herrenberg (DE)
(86) Internationale Anmeldenummer: PCT/EP2002/005992
(87) Internationale Veröffentlichungsnummer: WO 2003/001309

(56) Entgegenhaltungen:
- FR-A- 2 793 051
- SUKHAN LEE ET AL: "Tolerance analysis for multi-chain assemblies with sequence and functionality constraints" ROBOTICS AND AUTOMATION, 1997. PROCEEDINGS., 1997 IEEE INTERNATIONAL CONFERENCE ON ALBUQUERQUE, NM, USA 20-25 APRIL 1997, NEW YORK, NY, USA,IEEE, US, 20. April 1997 (1997-04-20), Seiten 927-932, XP010235580 ISBN: 0-7803-3612-7 in der Anmeldung erwähnt

## Beschreibung

Die Erfindung betrifft ein Verfahren zum Auswählen von weiteren Teil-Objekten eines physikalischen Objekts, auf deren Konstruktionen sich Festlegungen für ein erstes Referenzelement an einem ersten Teil-Objekt des physikalischen Objekts auswirken. Ein bevorzugtes Anwendungsgebiet ist die Toleranzplanung von Karosserien für Kraftfahrzeuge einschließlich der von Vorrichtungen für ihre Herstellung, wobei die Planung mehrere Phasen des Produktentstehungsprozesses umfaßt.

Im folgenden ist "Teil-Objekte" ein Oberbegriff für die Bauteile, Baugruppen, Aggregate, Zusammenbauten und Vorrichtungen, die zu konstruieren sind. Vorrichtungen, auch Geostationen genannt, werden für die Herstellung oder das Zusammenfügen von anderen Teil-Objekten benötigt. Alle diese Teil-Objekte bilden zusammen ein "physikalisches Objekt". "Referenzelemente" ist ein Oberbegriff insbesondere für "Referenzflächen" und "Referenzpunkte", "Referenzpunkte" einer für "Bezugspunkte", "Meßpunkte" und "Aufnahmepunkte". Jedes Referenzelement gehört zu genau einem Teil-Objekt.

Während der rechnerunterstützten Konstruktion eines physikalischen Objekts, das aus mehreren Teil-Objekten zusammengesetzt wird, sind Toleranzen dieser Teil-Objekte festzulegen. Diese Aufgabe wird als Toleranzmodellierung bezeichnet und ist ein wichtiger Teil der Toleranzplanung. Zu ermitteln ist, wie sich die Toleranz jedes Teil-Objekts auf die Toleranz anderer Teil-Objekte und letztlich des physikalischen Objekts auswirkt. Bei der Toleranzplanung ist dabei die Frage zu untersuchen, welche Toleranzen das physikalische Objekt in Abhängigkeit von den Toleranzen der Teil-Objekte haben wird.

Beispielsweise werden Toleranzen des physikalischen Objekts mit statistischen Annahmen über die Toleranzen der Teil-Objekte oder für den Fall, dass alle Teil-Objekte ihre Toleranzen ausschöpfen, ermittelt. Hierbei sind auch die Auswirkungen von Toleranzen an Vorrichtungen, die während der Fertigung und dem Zusammenfügen der Teil-Objekte verwendet werden, zu berücksichtigen.

Ein Anwendungsbereich der Toleranzplanung ist die Konstruktion des Rohbaus von Karosserien für Kraftfahrzeuge.

Unter "Toleranz" wird die Größe der erlaubten Abweichung von einer Sollvorgabe verstanden. Die internationale Norm ISO 1101 und die deutsche Norm DIN 1101 definieren den Begriff "Form- und Lagetoleranz" eines Elements als die Zone, in der dieses Element (Fläche, Achse; Mittelebene) liegen muß.

Toleranzen werden auf Referenzebenen bezogen. Referenzebenen werden durch Referenzpunkte definiert. Referenzpunkte sind insbesondere die Punkte an einer Aufspannvorrichtung, an denen Bauteile und Zusammenbauten in der Vorrichtung fixiert werden, sowie Löcher und Langlöcher in den Bauteilen, die zur Aufnahme des Bauteils in einer Vorrichtung dienen.

Komplexe physikalische Objekte werden von vielen Bearbeitern parallel konstruiert, bestimmte Bearbeiter sind für bestimmte Teil-Objekte zuständig. Für die Toleranzplanung sind diesen Bearbeitern Informationen über Toleranzen zur Verfügung zu stellen. Für jeden Bearbeiter sind Informationen über "seine" Teil-Objekte und über Einflüsse von außen und nach außen bereitzustellen.

Bei der Toleranzplanung werden üblicherweise CAD-Modelle der Teil-Objekte aufgestellt (CAD = Computer-Aided Design). In CAD-Modellen werden Informationen über Toleranzen eingebracht. Als nächstes wird die Fügereihenfolge festgelegt. Dann wird eine Toleranzanalyse durchgeführt, meist durch Toleranzsimulationen. Für diese Schritte stehen kommerzielle Werkzeuge zur Verfügung. Für jeden Schritt ist dennoch viel Arbeit von menschlichen Bearbeitern erforderlich.

Die Ergebnisse sind umfangreiche Protokolle mit Ergebnissen von Simulationsläufen. Viel menschliche Arbeit ist erforderlich, um die benötigten Informationen für ein bestimmtes Bauteil sowie über die Auswirkungen auf andere Bauteile oder auf Vorrichtungen herauszufinden. Hierzu sind die Protokolle durchzusehen, und menschliche Bearbeiter müssen Ergebnisse zusammensuchen und mit den CAD-Modellen und der Fügereihenfolge vergleichen.

Aus Martin Bohn, "Toleranzmanagement im Entwicklungsprozeß", Dissertation, Universität Karlsruhe, Fakultät für Maschinenbau, 1998, ist ein Vorgehen bekannt, wie menschliche Bearbeiter die toleranzrelevanten Größen identifizieren und die Toleranzen festlegen. Diese Festlegungen werden durchgängig durch mehrere Phasen des Produktentstehungsprozesses getroffen. Ein Vorgehen wird beschrieben, wie Toleranzsimulationen durchgeführt werden und wie menschliche Bearbeiter deren Ergebnisse auswerten. Nicht beschrieben wird hingegen, wie automatisch ermittelt wird, auf welche anderen Teil-Objekte sich Festlegungen für ein bestimmtes Teil-Objekt wie auswirken.

Während der rechnerunterstützten Konstruktion ist weiterhin das Spann- und Fixierkonzept für das physikalische Objekt festzulegen. Zu einem "Spann- und Fixierkonzept" gehören oft ein "Aufnahmekonzept", "Ausrichtkonzept", "Referenzelemente-System" und / oder ein "Bezugsstellen-System". Insbesondere legt ein Spann- und Fixierkonzept fest, wie und durch welche Vorrichtungen Teil-Objekte beim Zusammenfügen aufgespannt und fixiert werden.

In Sukan Lee & Chunski Yi: "Tolerance Analysis for Multi-Chain Assemblies with Sequence and Functionality Constraints", Proceed. 1997 IEEE Int. Conf. on Robotic and Automation, April 1997, pp. 927 - 932, wird ein Verfahren beschrieben, um die Baubarkeit ("assemblability") eines Produkts statistisch zu ermitteln. Das Produkt ist aus Bauteilen ("parts") aufgebaut. Bauteile haben Referenzelemente ("features"). Ein Referenzelement kann geometrische oder Positions-Toleranzen haben. Die Baubarkeit wird als die Wahrscheinlichkeit definiert, die Bauteile erfolgreich zum Produkt zusammenzufügen, vorausgesetzt die Bauteile sind so gefertigt, dass alle Toleranzen eingehalten werden.

Für ein einzelnes Referenzelement kann eine Einschränkung festgelegt sein, zwischen zwei benachbarten Referenzelementen "(mating features") können Abhängigkeiten festgelegt sein. Diese Einschränkungen und Abhängigkeiten werden als "constraints" bezeichnet. Unterschieden werden "geometrical constraints", "functional constraints" und "assembly sequence constraints". Manche Toleranzen lassen sich durch Freiräume ("clearances") zwischen zwei benachbarten Referenzelementen ausgleichen. Ein zulässiger Freiraum und eine funktionale Abhängigkeit zwischen zwei benachbarten Referenzelementen definiert einen justierbaren Abstand ("adjustable displacement") zwischen diesen. Justierbare Abstände vergrößern, Toleranzen verkleinern die Baubarkeit.

Die Abhängigkeiten zwischen den Referenzelementen werden in Sukan Lee & Chunski Yi durch einen ungerichteten Abhängkeits-Graphen ("feature graph") dargestellt. Ein Knoten dieses Graphen repräsentiert ein Bauteil oder Referenzelement und dessen räumliche Lage ("coordinate frame"), eine Kante eine Abhängigkeit zwischen den räumlichen Lagen zweier benachbarter Referenzelemente oder eines Bauteils und eines Referenzelements. Ein Zyklus ("parallel chain") ist ein Pfad ("chain") im Graphen, dessen Anfangs- und Endpunkt übereinstimmen. Behandelt wird der Fall, dass der Abhängigkeits-Graph zusammenhängend ist und mindestens zwei Zyklen umfaßt ("multi chain"). Ein justierbarer Abstand wird durch einen dreidimensionalen Körper, vorzugsweise ein Ellipsoid, repräsentiert. Um zu prüfen, ob die Bauteile und Referenzelemente eines Zyklus baubar sind, wird der Zyklus gedanklich an einem Knoten N_G zerschnitten, so dass zwei Pfade ("serial chains") entstehen. Die Toleranzen und justierbaren Abstände werden entlang beider Pfade propagiert. Für die räumliche Lage von Referenzelementen jedes Pfades werden Ellipsoide bestimmt. Geprüft wird, ob die beiden Ellipsoide, die für ein Referenzelement aufgrund der beiden Pfade bestimmt werden, sich überlappen oder nicht. Wenn sie sich für alle Knoten des Zyklus überlappen, so sind die Bauteile und Referenzelemente des Zyklus baubar, ansonsten nicht.

Die Toleranzen und justierbaren Abstände werden als normalverteilte stochastische Größen behandelt. Die Berechnungen der geometrischen Körper werden näherungsweise durch Monte-Carlo-Simulationen durchgeführt, indem gemäß der Wahrscheinlichkeits-Verteilung zufällige Werte für die Toleranzen erzeugt und "propagiert" werden. Ein Algorithmus wird vorgestellt, der für eine "multi chain" die Baubarkeit als Zahl zwischen 0 und 1 bestimmt. Die Baubarkeit kann dazu dienen, eine gute Fügereihenfolge ("assembly sequence") zu finden, in dem verschiedene mögliche Fügereihenfolgen durch die jeweils resultierende Baubarkeit bewertet werden, oder um Toleranz-Vorgaben zu bewerten.

Wie der Abhängigkeits-Graph erzeugt wird, wird in Sukan Lee & Chunski Yi nicht offenbart. Weiterhin wird nicht offenbart, wie entschieden wird, wann zwei Referenzelemente benachbarte und sich beeinflussende ("mating features") sind. Durch Sukan Lee & Chunski Yi wird lediglich nahegelegt, dass ein Fachexperte den Abhängigkeits-Graphen von Hand aufstellt. Damit hängt das Ergebnis von seiner Erfahrung und Intuition ab und ist nicht reproduzierbar. Die Gefahr besteht, dass Fehler gemacht werden oder das Ergebnis unvollständig in dem Sinne ist, dass ein Einfluß eines Teil-Objekts auf ein weiteres Teil-Objekt nicht im Abhängigkeits-Graph berücksichtigt wird. Diese Gefahr ist dann besonders groß, wenn das Produkt aus Hunderten oder gar Tausenden von Bauteilen und Referenzelementen besteht, was bei einer Kfz-Karosserie der Fall sein kann.

In R. Söderberg: "Robust Design by Support of CAT Tools", Proceed. 1998 ASME Design Engineering Technical Conferences, Sept. 13-16, 1998, Atlanta, pp. 1 - 11, verfügbar unter http://www.mvd.chalmers.se/~lali/3dtm/dac5633.pdf (recherchiert am 27.3.2002) werden Verfahren erörtert, um eine robuste Konstruktion zu erzeugen und um Referenzelementen Toleranzen zuzuordnen. Die Funktion eines Produkts wird durch Produkt-Kenngrößen "(product key characteristics") maßgeblich beeinflußt. Diese Produkt-Kenngrößen, z. B. Messungen zwischen zwei Meßpunkten, hängen oft von geometrischen Kenngrößen einzelner Bauteile oder Gestaltungselementen eines Produkts ab. Beispielsweise hängt die Produkt-Kenngröße Türspalt eines Autos von mehreren unabhängigen Kenngrößen ("input parameters") von Tür, Rahmen, Federung und gesamten Rohbau ab. Die Aufgabe der robusten Konstruktion wird in Söderberg dahingehend präzisiert, dass eine Produkt-Kenngröße von möglichst wenigen unabhängigen Kenngrößen abhängen sollte und möglichst wenige Wechselwirkungen zwischen Kenngrößen auftreten sollten. An einem Beispiel wird erläutert, wie ein Konstrukteur eine Konstruktion und Fertigung eines dreiteiligen Fahrzeugbodens so abändert, dass die Produkt-Kenngröße Gesamtbreite von einer einzigen unabhängigen Kenngröße anstelle dreier abhängt. Um die Komplexität der Toleranzplanung für eine dreidimensionale Konstruktion zu reduzieren, wird das 3-2-1-Bezugspunkt-Schema ("3-2-1 schema") vorgestellt. Hierbei legt man sechs Bezugspunkte ("locators") fest, und zwar zuerst drei Punkte in einer Ebene, dann zwei weitere Punkte außerhalb dieser Ebene und dann den sechsten Punkt. Diese sechs Bezugspunkte schränken die sechs Freiheitsgrade (drei Translationen, drei Rotationen) ein.

Vorgeschlagen wird in Söderberg, mit Hilfe kommerzieller Software-Werkzeuge für die Toleranzplanung ("computer-aided tolerancing") ermitteln zu lassen, welche unabhängigen Kenngrößen von Referenzelementen ("feature variation") welche relativen Einflüsse auf jeweils eine Produkt-Kenngröße haben ("contribution analysis"). Hierfür werden Monte-Carlo-Simulationen durchgeführt, bei der jeweils eine zu untersuchende unabhängige Kenngröße innerhalb der vorgegebenen Toleranz variiert wird und alle anderen unabhängigen Kenngrößen konstant bleiben. Hierfür werden nicht vollständige Konstruktionen aller Bauteile des Produkts benötigt, sondern nur die Geometrie der Schnittstellen zwischen Bauteilen und Referenzelementen, insbesondere räumliche Lage und Richtung der Variation "(direction of variation") von Bezugspunkten und räumliche Ausdehnung von Bauteilen.

Die Toleranzsimulation wird mit dem Ziel durchgeführt, den Einfluß von unabhängigen Kenngrößen zu ermitteln. Bearbeiter verändern die Bezugspunkte und Schnittstellen-Geometrie anschließend dergestalt, dass nach der Änderung weniger unabhängige Kenngrößen mit großem Einfluß auf die Produkt-Kenngrößen vorhanden sind als zuvor. Diese Veränderung erfordert die Kreativität von Bearbeitern, eine Schematisierung oder Automatisierung wird nicht erwähnt.

Die in Söderberg vorgestellten Toleranzsimulationen benötigen Informationen darüber, welche Referenzelemente welche anderen Referenzelemente beeinflussen oder mit welchen anderen kompatibel sind. Wie diese Informationen erzeugt werden, wird nicht offenbart.

In H. Johannesson, R. Söderberg: "Structure and Matrix Models for Tolerance Analysis from Configuration to Detail Design", Accepted for publication Journal Research in Engineering Design, Vol.12, 2000, pp.112-125, verfügbar unter http://www.mvd.chalmers.se/~lali/3dtm/riedhjrs.pdf (recherchiert am 27.3.2002) wird das 3-2-1-Bezugspunkt-Schema detaillierter vorgestellt. Jedes Bauteil hat höchstens ein System von Bezugspunkten ("master locating system", ↑P-frame") ohne Toleranzenb, durch welches das Bauteil im Produkt positioniert wird. Das Bauteil kann mehrere Positionierpunkte ("↓P-frame") haben, in denen das Bauteil andere Bauteile positioniert. Geometrische Abhängigkeiten für das Produkt lassen sich in solche für einzelne Positionierungspunkte zerlegen. Eine Stabilitätsmatrix A verbindet einen Vektor x von Eigenschaften von Bezugspunkten mit einem Vektor y von resultierenden Positionsangeben in der Form y = A * x. Mit der Stabilitätsmatrix lassen sich das Maß der Kopplung verschiedener Kenngrößen ("degree of coupling") und die Robustheit untersuchen.

In H. Johannesson, R. Söderberg wird ein Ansatz vorgestellt, um von oben nach unten funktionale Anforderungen ("functional requirements") an die Geometrie, z. B. an Positionen von Bauteilen, mit Konstruktionsparameter "(design parameter") zu verbinden. Ein Bearbeiter modelliert, welche funktionalen Anforderungen durch welche Konstruktionsparameter erfüllt werden, und zerlegt das Produkt, z. B. ein Fahrzeug, gedanklich in Teilsysteme und Bauteile. Der Bearbeiter stellt einen gerichteten Graphen für die Funktionen und Konstruktionen ("function-means hierarchy") auf, der Konstruktionsparameter einer Ebene mit funktionale Anforderungen der nächsten Ebene verknüpft. Aus dem gerichteten Graphen lassen sich Toleranzketten ("tolerace chains") ableiten, die die Abhängigkeiten zwischen verschiedenen Bauteilen, zwischen Bauteilen und Randbedingungen sowie zwischen verschiedenen Randbedingungen zeigen. wird anschließend durch Toleranz-Simulation automatisch ermittelt, welchen Einfluß welche Konstruktionsparameter auf funktionale Anforderungen an das Produkt haben.

In H. Johannesson, R. Söderberg wird nicht beschrieben, wie die "function-means hierarchy" erzeugt wird. Es wird nur der Weg nahegelegt, dass man von Hand die Abhängigkeiten zwischen funktionalen Anforderungen und Konstruktions-Parameter aufstellt. Dabei ist es insbesondere erforderlich, von Hand zu ermitteln, auf welche anderen Referenzelemente ein bestimmtes Referenzelement Einfluß hat. Dies ist insbesondere für umfangreiche Produkte fehleranfällig, führt leicht zu Lücken und übersehenen Zusammenhängen und ist nicht wirtschaftlich durchführbar.

Der Erfindung liegt die Aufgabe zugrunde, ein automatisch ausführbares Verfahren zu schaffen, um weitere Teil-Objekte eines physikalischen Objekts auszuwählen, auf deren Konstruktionen sich Festlegungen für ein erstes Referenzelement an einem ersten Teil-Objekt des physikalischen Objekts auswirken. Das Verfahren soll die Gefahr verringern, dass bei Veränderungen am ersten Referenzelement die Konsistenz unter Konstruktionen der Teil-Objekte und damit der Konstruktion des physikalischen Objekts verloren geht. Weiterhin ist eine Vorrichtung zur Durchführung des Verfahrens zu schaffen.

Die Aufgabe wird durch ein Verfahren nach Anspruch 1 oder Anspruch 2 sowie durch eine Vorrichtung nach Anspruch 12 oder Anspruch 13 gelöst. Vorteilhafte Ausgestaltungen sind in den Unteransprüchen angegeben.

Vorgegeben sind das physikalische Objekt, das aus dem ersten Teil-Objekt und mindestens einem weiteren Teil-Objekt besteht, das erste Teil-Objekt als ein zuvor ausgewähltes Teil-Objekt und das erste Referenzelement, das zur Konstruktion des ersten Teil-Objekts gehört, als ein zuvor ausgewähltes Referenzelement. Jedes Teil-Objekt des physikalischen Objekts kann als erstes Teil-Objekt ausgewählt sein, und jedes Referenzelement am ersten Teil-Objekt kann als erstes Referenzelement ausgewählt sein. Weiterhin ist eine Konstruktion des physikalischen Objekts vorgegeben. Diese Konstruktion umfaßt Konstruktionen des ersten und des weiteren Teil-Objekts, wobei vorzugsweise die Konstruktion jedes dieser Teil-Objekte die räumliche Ausdehnung und die räumliche Lage des Teil-Objekts umfaßt. Die Konstruktion des ersten Teil-Objekts umfaßt außerdem das erste Referenzelement und dessen räumliche Lage. Vorzugsweise legt die Konstruktion die räumliche Lage des ersten Referenzelements relativ zum ersten Teil-Objekt fest. Darüber hinaus ist eine Fügereihenfolge vorgegeben, die festlegt, welche Teil-Objekte des physikalischen Objekts unter Verwendung welcher anderen Teil-Objekte in welcher Reihenfolge zusammengefügt werden.

Das erfindungsgemäße Verfahren sieht vor, dass für das erste Referenzelement nach Ziel-Objekten unter den weiteren Teil-Objekten, die in der Fügereihenfolge nach dem ersten Teil-Objekt auftreten, gesucht wird. Ein in der Fügereihenfolge nach dem ersten Teil-Objekt auftretendes weiteres Teil-Objekt ist dann ein Ziel-Objekt für das erste Referenzelement, wenn es das erste Teil-Objekt im ersten Referenzelement aufnimmt und / oder fixiert.

Das Verfahren kann ein oder mehrere Ziel-Objekte liefern oder auch das Ergebnis, dass es für das erste Referenzelement beim für die Ermittlung berücksichtigten Konstruktionsstand kein Ziel-Objekt gibt.

Beim Verfahren nach Anspruch 1 werden die räumliche Lage des ersten Referenzelement mit der räumlichen Ausdehnung und Lage eines weiteren Teil-Objekts, das in der Fügereihenfolge nach dem ersten Teil-Objekt auftritt, verglichen. Außerdem wird die durch das erste Referenzelement eingeschränkte Richtung mit der räumlichen Orientierung des weiteren Teil-Objekts verglichen. Unter der räumlichen Orientierung einer Fläche, manchmal auch räumliche Ausrichtung genannt, wird die Richtung eines Normalenvektors verstanden, das ist ein Vektor, der senkrecht auf der Fläche steht. Falls kein Vergleich einen Unterschied liefert, der größer als eine vorgegebene Schranke ist, wird entschieden, dass das weitere Teil-Objekt ein Ziel-Objekt ist, d. h. das erste Teil-Objekt im ersten Referenzelement aufnimmt und/oder fixiert.

Das Verfahren nach Anspruch 2 sieht vor, bei der Ermittlung von Ziel-Objekten Referenzelemente der Konstruktion mindestens eines weiteren Teil-Objekts zu berücksichtigen und mit dem ersten Referenzelement zu vergleichen. Geprüft wird, ob das erste Referenzelement mit dem weiteren Referenzelement kompatibel ist. Ergibt die Prüfung, dass die Referenzelemente miteinander kompatibel sind, so wird entschieden, dass das Teil-Objekt, dessen Konstruktion weitere Referenzelement umfaßt, ein Ziel-Objekt für das erste Referenzelement ist.

Die Kenntnis der Ziel-Objekte wird benötigt, um sicherzustellen, dass das erste Referenzelement mit den Teil-Objekten zusammenpaßt, die das erste Teil-Objekt zumindest zeitweise während der Fertigung aufnehmen und / oder fixieren, und um sicherzustellen, dass das erste Teil-Objekt zu den weiteren Teil-Objekten paßt, mit denen es lösbar oder nicht lösbar verbunden wird. Durch diese Kenntnis wird die Gefahr verringert, dass die Konstruktionen zweier Teil-Objekte nicht zueinander passen. Werden derartige Unverträglichkeiten zwischen den Konstruktionen verschiedener Teil-Objekte erst nach Abschluß der Konstruktion oder gar erst im laufenden Betrieb entdeckt, etwa bei der Fertigung und dem Zusammenbau von Teil-Objekten oder gar erst im Betrieb, so sind typischerweise unter hohem Zeitdruck Änderungskonstruktionen durchzuführen oder gar bereits gefertigte Teil-Objekte nachträglich umzubauen, was zu erheblichen Kosten führen kann.

Das erfindungsgemäße Verfahren zeigt einen Weg auf, um zuverlässig, wiederholbar, systematisch, schnell und daher zeitnah sowie kostengünstig Auswirkungen von Konstruktionsentscheidungen zu ermitteln, und zwar auch dann in effizienter Weise, wenn das physikalische Objekt aus Hunderten oder gar Tausenden von Teil-Objekten besteht oder wenn die Konstruktionen dieser Teil-Objekte von vielen verschiedenen Bearbeitern erzeugt und verändert werden. Ein besonders großer Vorteil entsteht, wenn die Bearbeiter für die Teil-Objekte räumlich verteilt und zeitlich parallel arbeiten. Auch in diesem Fall sind Konstruktionen vieler Teil-Objekte schnell aufeinander abzustimmen, und zugleich kennt jeder Bearbeiter nur die Konstruktionen weniger Teil-Objekte. Das erfindungsgemäße Verfahren wird vorzugsweise nach jeder größeren Änderung an einem Teil-Objekt und / oder Erreichen eines neuen Konstruktionsstandes für die Konstruktion des physikalischen Objektes erneut durchgeführt.

Ein weiterer Vorteil des erfindungsgemäßen Verfahrens liegt darin, dass es frühzeitig im Produktentstehungsprozeß angewendet werden kann. Es ist nicht erforderlich, dass für jedes Teil-Objekt des physikalischen Objekts bereits eine Konstruktion erzeugt wurde, bevor das Verfahren angewendet wird. Es reicht aus, dass Konstruktionen der in der Fügereihenfolge nachfolgenden Teil-Objekte vorliegen, unter ihnen eine des Ziel-Objekts. Diese Konstruktionen brauchen nicht notwendigerweise schon vollständig erzeugt zu sein, sondern nur soweit, dass entschieden werden kann, welches die Ziel-Objekte sind, und die durch die Ausgestaltungen vorgesehenen Vergleiche und Prüfungen durchgeführt werden können.

Ein Referenzelement ist entweder ein Referenzpunkt oder eine Referenzebene. Vorzugsweise ist jeder Referenzpunkt ein Bezugspunkt oder ein Aufnahmepunkt, und jede Referenzebene ist eine Bezugsfläche oder eine Aufnahmefläche.

Das physikalische Objekt umfaßt vorzugsweise zwei Arten von Teil-Objekten: einerseits Teil-Objekte, die zu einem weiteren physikalischen Objekt gehören, andererseits Teil-Objekte, die als Vorrichtungen bei der Herstellung und dem Zusammenfügen der ersten Art von Teil-Objekten zum weiteren physikalischen Objekt verwendet werden. Die erste Art von Teil-Objekten wird für die Zeit der Nutzung des weiteren physikalischen Objekts zusammengefügt, die zweite Art tritt für die Zeit der Herstellung des weiteren physikalischen Objekts in Wechselwirkung mit Teil-Objekten der ersten Art. Die beiden Arten von Teil-Objekten werden vorzugsweise gemeinsam konstruiert, um frühzeitig sicherzustellen, dass sie zusammenpassen.

Das weitere physikalische Objekt ist beispielsweise eine Karosserie eines Kraftfahrzeuges. Das weitere Teil-Objekt ist eine Vorrichtung oder ein Bestandteil einer Vorrichtung, die das erste Teil-Objekt zumindest zeitweise bei der Herstellung der Karosserie im ersten Referenzelement berührt. Das physikalische Objekt besteht dann aus der Karosserie und den Vorrichtungen für die Herstellung der Karosserie. Es umfaßt in der Regel Hunderte von Teil-Objekten, die zueinander passen müssen.

Das erfindungsgemäße Verfahren wird vorzugsweise für eine Toleranzplanung und / oder für eine Festlegung des Spann- und Fixierkonzeptes und / oder Aufnahmekonzepts und / oder Ausrichtkonzepts und / oder Referenzelemente-Systems und / oder Bezugsstellen-Systems verwendet, und zwar bevorzugt während der rechnerunterstützten Konstruktion eines physikalischen Objekts.

Vorzugsweise wird die Prüfung, ob ein weiteres Teil-Objekt ein Ziel-Objekt ist, für jedes Teil-Objekt durchgeführt, das in der Fügereihenfolge nach dem ersten Teil-Objekt auftritt. Eine andere Ausgestaltung sieht vor, dass die Prüfung in Schritt b) so oft wiederholt wird, bis entweder mindestens ein Ziel-Objekt ermittelt wurde oder bis feststeht, dass unter den in der Fügereihenfolge nach dem ersten Teil-Objekt auftretenden weiteren Teil-Objekten kein Ziel-Objekt für das erste Referenzelement existiert.

Vorzugsweise werden zwei Arten von Ziel-Objekten unterschieden, nämlich direkte und indirekte Ziel-Objekte. Hierbei tritt in der Fügereihenfolge zwischen dem ersten Teil-Objekt und einem direkten Ziel-Objekt kein weiteres Ziel-Objekt für das erste Referenzelement auf, während zwischen dem ersten Teil-Objekt und einem indirekten Ziel-Objekt mindestens ein weiteres Ziel-Objekt für das erste Referenzelement auftritt. Durch diese Eigenschaft werden direkte und indirekte Ziel-Objekte voneinander unterschieden. Das erste Teil-Objekt wird direkt durch ein direktes Ziel-Objekt aufgenommen und / oder fixiert. Ein indirektes Ziel-Objekt nimmt hingegen ein direktes Ziel-Objekt und damit indirekt das erste Teil-Objekt auf und / oder fixiert es. Vorzugsweise wird für mindestens ein Ziel-Objekt zusätzlich entschieden wird, ob es ein direktes oder ein indirektes Ziel-Objekt für das erste Referenzelement ist.

Vorzugsweise umfaßt die Konstruktion des ersten Teil-Objekts eine Festlegung, wie weit ein Ziel-Objekt vom ersten Referenzelement mindestens oder höchstens entfernt sein darf. Für ein in der Fügereihenfolge nach dem ersten Teil-Objekt auftretenden weiteres Teil-Objekt wird der Abstand zwischen diesem weiteren Teil-Objekt und dem ersten Referenzelement ermittelt. Der ermittelte Abstand wird mit dem festgelegten Abstand verglichen.

Ein Kriterium für die Ermittlung von Ziel-Objekten für das erste Referenzelement wird in den Ansprüchen 1, 3 und 4 genannt. Die räumliche Orientierung des Referenzpunktes bezüglich des weiteren Teil-Objekts wird ermittelt, das ist die Richtung eines Normalenvektors auf der Oberfläche des Teil-Objekts im ersten Referenzpunkt. Vorzugsweise wird der Vektor durch Angabe einer x-Komponente, y-Komponente und z-Komponente angegeben, und der Vektor hat die Länge Eins. Diese räumliche Orientierung, manchmal auch räumliche Ausrichtung genannt, wird mit der durch den ersten Referenzpunkt eingeschränkten Richtung verglichen. Die Ausgestaltung berücksichtigt für den Fall eines Referenzpunkts die Möglichkeit, dass der ersten Referenzpunkt nicht auf der Oberfläche des weiteren Teil-Objekts liegt und es daher verschiedene Normalenvektoren gibt, die durch den ersten Referenzpunkt verlaufen.

Vorzugsweise wird der Vergleich dann durchgeführt, wenn der erste Referenzpunkt auf der oder nahe der Oberfläche des weiteren Teil-Objekts liegt. Falls beim Verfahren nach Anspruch 1 die Richtung des Normalenvektors stärker als eine vorgegebene Schranke von der eingeschränkten Richtung abweicht, so ist das ausgewählte Teil-Objekt kein Ziel-Objekt für den ersten Referenzpunkt.

Die im folgenden beschriebene Ausgestaltung des Verfahrens nach Anspruch 2 legen fest, wie in Schritt b) geprüft wird, ob das erste Referenzelement mit dem weiteren Referenzelement kompatibel ist. Die Ausgestaltungen legen dabei notwendige Kriterien für die Kompatibilität fest. Ist ein Kriterium verletzt, so sind die Referenzelemente nicht miteinander kompatibel.
- Die beiden Referenzelemente werden mindestens dann als nicht kompatibel gewertet, wenn ihre räumlichen Lagen nicht miteinander übereinstimmen. Vorzugsweise wird eine räumliche Lage durch eine x-, y- und z-Koordinate beschrieben. Da z. B. Rundungsfehler und Rechengenauigkeiten zu berücksichtigen sind, wird festgelegt, wann zwei räumliche Lagen als übereinstimmend gewertet werden.
- In Anspruch 4 wird die Möglichkeit berücksichtigt, dass beide Referenzelemente Referenzpunkte sind, für die je ein Normalenvektor ermittelt wird. Der eine Normalenvektor steht im ersten Referenzpunkt senkrecht auf der Oberfläche des ersten Teil-Objekts. Der andere Normalenvektor steht im weiteren Referenzpunkt senkrecht auf der Oberfläche des weiteren Teil-Objekts. In den Konstruktionen des ersten bzw. des weiteren Teil-Objekts sind die Normalenvektoren enthalten, oder sie werden bei Bedarf aus den Konstruktionen ermittelt. Vorzugsweise wird der Vektor durch Angabe einer x-Komponente, y-Komponente und z-Komponente angegeben, und der Vektor hat die Länge Eins. Mindestens dann, wenn diese Normalenvektoren nicht übereinstimmen, werden die beiden Referenzpunkte als nicht kompatibel gewertet. Genau wie beim Vergleich von räumlichen Lagen wird auch beim Vergleich von Vektoren festgelegt, wann zwei Vektoren als übereinstimmend zu werten sind.
- In Anspruch 4 wird die Möglichkeit berücksichtigt, dass beide Referenzelemente Referenzflächen sind. Für beide Referenzflächen ist je eine räumliche Orientierung in Form eines Normalenvektors auf der Referenzfläche festgelegt. Mindestens dann, wenn diese Normalenvektoren nicht übereinstimmen, werden die beiden Referenzflächen als nicht kompatibel gewertet.
- Gemäß Anspruch 3 kann festgelegt sein, in welcher Richtung das erste Referenzelement die räumliche Bewegung des ersten Teil-Objekts einschränkt. Weiterhin ist festgelegt, in welcher Richtung das weitere Referenzelement die räumliche Bewegung des weiteren Teil-Objekts einschränkt. Vorzugsweise ist jede Einschränkung eine in x-Richtung, y-Richtung oder in z-Richtung. Mindestens dann, wenn die eingeschränkten Richtungen nicht übereinstimmen, werden die beiden Referenzflächen als nicht kompatibel gewertet.
- Anspruch 3 sieht weiterhin vor, dass festgelegt sein kann, von welcher Art das erste Referenzelement und von welcher Art das weitere Referenzelement ist. Vier mögliche Arten von Referenzelementen sind Bezugspunkte, Aufnahmepunkte, Bezugsflächen und Aufnahmeflächen. Mindestens dann, wenn diese Arten nicht übereinstimmen, werden die beiden Referenzelemente als nicht kompatibel gewertet.
- Die Konstruktion des ersten Teil-Objekts kann eine Form- oder Lagetoleranz für das erste Referenzelement umfassen, und die Konstruktion des weiteren Teil-Objekts kann eine Form- oder Lagetoleranz für das weitere Referenzelement umfassen. Mindestens dann, wenn die beiden Toleranzen nicht übereinstimmen, werden die beiden Referenzelemente als nicht kompatibel gewertet (Anspruch 3).
- Die Konstruktion des ersten Teil-Objekts kann eine Festlegung umfassen, wie weit ein Ziel-Objekt vom ersten Referenzelement mindestens oder höchstens entfernt sein darf. Dadurch wird eine untere bzw. obere Schranke vorgegeben. Die beiden Referenzelemente werden mindestens dann als nicht kompatibel gewertet, wenn ihr Abstand voneinander größer als die festgelegte höchste Entfernung oder kleiner als die festgelegte mindeste Entfernung ist.
- Ein weiteres Kriterium ist anwendbar, wenn beide Referenzelemente Referenzpunkte sind. Festgelegt ist, in welcher Richtung der erste Referenzpunkt die räumliche Bewegung des ersten Teil-Objekts einschränkt. Ermittelt wird die räumliche Orientierung des weiteren Referenzpunktes, das ist ein Normalenvektor auf der Oberfläche des weiteren Teil-Objekts im weiteren Referenzpunkt. Beispielsweise ist ein solcher Normalenvektor in der Konstruktion des weiteren Teil-Objekts festgelegt. Die Richtung dieses Normalenvektors wird mit der durch den ersten Referenzpunkt eingeschränkten Richtung verglichen.

Vorzugsweise werden diejenigen der oben beschriebenen Einzel-Prüfungen nacheinander ausgeführt, deren Voraussetzungen erfüllt sind. Ergibt eine Einzel-Prüfung, dass die beiden Referenzelemente nicht miteinander kompatibel sind, wird die nächste Einzel-Prüfung nicht ausgeführt. Falls bei allen sechs Vergleichen entweder Übereinstimmung festgestellt wird oder die Einzel-Prüfung mangels entsprechender Geometrie-Informationen nicht durchgeführt werden kann, so sind die beiden Referenzelemente miteinander kompatibel.

Eine komplette Konstruktion eines Teil-Objekts besteht aus sehr vielen Informationen. Der Vergleich von Konstruktionen kann viel Laufzeit und Rechenkapazität erfordern. Um diesen Aufwand zu reduzieren, sieht eine Ausgestaltung vor, zunächst aus den Konstruktionen der Teil-Objekte die Referenzelemente zu extrahieren und anschließend zu erfassen. Hierbei werden insbesondere geometrische Informationen über die Referenzelemente und Verweise auf die Teil-Objekte, zu denen die Referenzelemente gehören, extrahiert. Für die Prüfung in Schritt b) werden ausschließlich die extrahierten Referenzelemente verwendet.

Eine bevorzugte Ausführungsform sieht vor, dass eine Gesamt-Kennung eines Referenzelements aus mindestens drei einzelnen Kennungen zusammengesetzt wird, nämlich aus
- einer Kennung desjenigen Teil-Objekts, zu dessen Konstruktion das Referenzelement gehört,
- einer Kennung, mit der das Referenzelement von anderen Referenzelementen an demselben Teil-Objekt unterschieden wird,
- und eine Kennung für die Art des Referenzelements.

Als Kennung für ein Teil-Objekt werden z. B. dessen Sachnummer sowie ein Buchstabe, der Bauteile, Zusammenbauten, Aggregate und Vorrichtungen voneinander unterscheidet, verwendet.

Die Gesamt-Kennungen besitzen eine hohe Aussagekraft. Dann kann insbesondere ein Bearbeiter von der Gesamt-Kennung eines Referenzelements, das z. B. in einem Papier-Ausdruck genannt ist, auf dessen Lage und Bedeutung schließen. Ein Bearbeiter kann die Konstruktion, die ein anderer Bearbeiter erzeugt hat, leichter verstehen. Außerdem lassen sich durch eine geeignete Festlegung aus einer Gesamt-Kennung Informationen über das Referenzelement automatisch ableiten.

Vorzugsweise werden erfinderische Gesamt-Kennungen nicht nur für Referenzelemente vergeben, sondern für jedes Gestaltungselement. "Gestaltungselemente" ist ein Oberbegriff für "Referenzelemente" und umfaßt insbesondere Bezugspunkte, Aufnahmepunkte, Messungen, Meßpunkte, Abmessungen. Durch die Gesamt-Kennungen werden insbesondere unterschiedliche Arten von Gestaltungselementen unterschieden.

Vorzugsweise werden alle Gestaltungselemente mit derartigen Gesamt-Kennungen versehen und dadurch nach einer einheitlichen Nomenklatur benannt. Dadurch lassen sich die Gestaltungselemente leicht z. B. in Ergebnissen von Toleranzsimulationen wiederfinden, weil die Namen gemäß der einheitlichen Nomenklatur eine hohe Ausdruckskraft besitzen. Alle Gesamt-Kennungen für Gestaltungselemente lassen sich automatisch erzeugen.

Vorzugsweise wird die erfindungsgemäß erzeugte Information, dass das erste mit dem weiteren Gestaltungselement kompatibel ist, in der Gesamt-Kennung des ersten und / oder des weiteren Gestaltungselements codiert. Gemäß Anspruch 6 wird für das weitere Referenzelement eine Gesamt-Kennung erzeugt, die auf das erste Referenzelement verweist, indem sie eine Kennung für das erste Teil-Objekt, eine Kennung, die das erste Referenzelement von weiteren Referenzelementen der Konstruktion des ersten Teil-Objekts unterscheidet, und eine Kennung für die Art des ersten Referenzelements umfaßt. Umgekehrt wird gemäß Anspruch 5 für das erste Referenzelement eine Gesamt-Kennung erzeugt, die auf das weitere Referenzelement verweist.

Eine derartige Gesamt-Kennung für das erste Referenzelement wird gemäß Anspruch 8 um eine Kennung für ein weiteres Teil-Objekt erweitert. Falls ein direktes Ziel-Objekt gefunden wird, so wird die Gesamt-Kennung für das erste Referenzelement um eine Kennung für dieses direkte Ziel-Objekt erweitert.

Die Ausgestaltung nach Anspruch 5 oder Anspruch 6 oder Anspruch 8 ist insbesondere dann vorteilhaft, wenn das erfindungsgemäße Verfahren mehrmals durchgeführt wird. Gemäß Anspruch 9 wird bei einer Durchführung des Verfahrens eine Gesamt-Kennung für das erste Gestaltungselement nach Anspruch 5 oder Anspruch 8 erzeugt. Bei dieser oder einer weiteren Durchführung werden in Schritt b) weitere Teil-Objekte in Abhängigkeit von der Gesamt-Kennung des ersten Referenzelements ausgewählt. Vorzugsweise werden nur diejenigen Teil-Objekte ausgewählt, deren Kennungen in der Gesamt-Kennung des ersten Referenzelements enthalten sind.

Anspruch 7 sieht das entsprechende für das weitere Referenzelement anstelle des ersten Referenzelements vor. Bei einer Durchführung des Verfahrens nach Anspruch 7 wird eine Gesamt-Kennung für das weitere Referenzelement erzeugt. Bei dieser oder einer weiteren Durchführung wird die Gesamt-Kennung beim Prüfen weiterer Teil-Objekte berücksichtigt. Vorzugsweise wird das weitere Referenzelement nur dann auf Kompatibilität mit dem ersten Referenzelement geprüft, wenn die Gesamt-Kennung des weiteren Referenzelements eine Kennung für das erste Teil-Objekt, eine Kennung, die das erste von anderen Referenzelementen am ersten Teil-Objekt unterscheidet, und eine Kennung für die Art des ersten Referenzelements umfaßt.

Die bislang beschriebenen Ausführungsformen der Erfindung sehen vor, dass bei der Ermittlung von Ziel-Objekten nur vorhandene Referenzelemente verglichen werden. Dies erfordert, dass die Referenzelemente vor Anwendung des erfindungsgemäßen Verfahrens erzeugt worden sind. Die Gefahr von Fehlern wird reduziert, wenn statt dessen Konstruktionen von Teil-Objekten durch die Weiterbildung des erfindungsgemäßen Verfahrens um kompatible Referenzelemente erweitert werden. Das Verfahren nach Anspruch 10 lehrt, wie ein solches Referenzelement automatisch erzeugt wird. Wenn ein Ziel-Objekt für das erste Referenzelement ausgewählt wird, wird automatisch ein weiteres Referenzelement erzeugt, das zur Konstruktion dieses Ziel-Objekts gehört. Es wird dergestalt erzeugt, dass es mit dem ersten Referenzelement der Konstruktion des ersten Teil-Objekts kompatibel ist. Das weitere Referenzelement, das automatisch erzeugt wurde, umfaßt eine Kennung und die räumliche Lage relativ zu dem ausgewählten Ziel-Objekt. Ein mögliches Ergebnis dieser Ausgestaltung ist, dass es nicht möglich ist, ein weiteres Referenzelement zu erzeugen, das zum Ziel-Objekt gehört und mit dem ersten Referenzelement kompatibel ist.

Vorzugsweise gehört das automatisch erzeugte Referenzelement zur Konstruktion eines direkten Ziel-Objekts, und es ist mit dem ersten Referenzelement kompatibel gemäß der durch Anspruch 3 oder 4 definierten Kriterien. Anspruch 11 sieht vor, dass das erste und das weitere Referenzelement entweder beide Referenzpunkte oder beide Referenzflächen sind. Außerdem werden bei der Erzeugung des weiteren Referenzelements die Richtung des Normalenvektors, die eingeschränkte Richtung und die Art vom ersten Referenzelement übernommen (Anspruch 11), so dass das erste und das weitere Referenzelement übereinstimmen hinsichtlich
- ihrer räumlichen Lagen,
- Normalenvektor auf der Oberfläche des jeweiligen Teil-Objekts bzw. der jeweiligen Referenzfläche
- Richtung, in der die räumliche Bewegung des jeweiligen Teil-Objekts eingeschränkt wird,
- und Art des Referenzelements.

Dabei wird geprüft, ob es überhaupt möglich ist, ein weiteres Referenzelement zu erzeugen, das mit dem ersten Referenzelement kompatibel ist und das zur Konstruktion des direkten Ziel-Objekts gehört.

Vorzugsweise wird vor Erzeugung der Dokumentation eine wiederverwendbare Vorlage für die Dokumentation erzeugt. Die Dokumentation wird dadurch erzeugt, dass eine Kopie dieser Vorlage ausgefüllt wird. Die Verwendung einer wiederverwendbaren Vorlage ist insbesondere dann von Vorteil, wenn das erfindungsgemäße Verfahren mehrmals ausgeführt wird und dabei mehrere Dokumentationen erzeugt werden, z. B. für verschiedene Teil-Objekte oder Referenzelemente oder für verschiedene Konstruktionsstände der Konstruktion eines Teil-Objekts.

Das erfindungsgemäße Verfahren ist insbesondere dann von Vorteil, wenn das physikalische Objekt viele Teil-Objekte umfaßt, deren Konstruktionen von vielen Bearbeitern parallel erzeugt und verändert werden. Damit die Konstruktionen der Teil-Objekte zueinander passen, werden vorzugsweise diejenigen Bearbeiter über eine Änderung informiert, auf deren Konstruktionen sich die Änderung auswirkt. Daher wird in einer Ausgestaltung für mindestens ein ermitteltes Ziel-Objekt geprüft, ob das Ziel-Objekt mit einer Adresse verknüpft ist. An diese Adresse wird eine Nachricht mit den erfindungsgemäß ermittelten Auswirkungen gesandt.

Beispielsweise ist ein Adressat dieser Nachricht ein Bearbeiter, der für die Konstruktion des Ziel-Objekts verantwortlich ist. Die Nachricht umfaßt eine Kennzeichnung des ersten Referenzelements und eine des ermittelten Ziel-Objekts. Vorzugsweise werden hierfür Gesamt-Kennungen nach einem der Ansprüche 5 bis 9 verwendet. Falls mehrere Ziel-Objekte ermittelt wurden, werden vorzugsweise mehrere Nachrichten erzeugt und an verschiedene Adressen versandt.

Vorausgesetzt wird hierbei, dass mindestens ein weiteres Teil-Objekt mit einer Adresse verknüpft ist. Geprüft wird für mindestens ein Ziel-Objekt, ob das Ziel-Objekt mit einer Adresse verknüpft ist. Falls dem so ist, wird eine Nachricht erzeugt, die eine Kennung des ersten Referenzelements und eine Kennung des Ziel-Objekts umfaßt. Vorzugsweise wird zuerst eine Dokumentation wie gerade beschrieben erzeugt. Anschließend wird eine Nachricht, die diese Dokumentation umfaßt, erzeugt und an die Adresse versandt, die mit dem Ziel-Objekt verknüpft ist.

Um die Adresse herauszufinden, an die eine solche Nachricht versandt wird, sind die Teil-Objekte des physikalischen Objekts mit Adressen verknüpft. Diese Adresse ist vorzugsweise eine E-mail-Adresse, und die Nachricht wird in elektronischer Form über ein Nachrichtennetz, z. B. ein Intranet, versandt. Vorzugsweise wird die Verknüpfung von Teil-Objekten mit Adressen dadurch erzeugt, dass zwei Tabellen automatisch miteinander verknüpft werden:
- eine Tabelle, die jedes Teil-Objekt mit dem Bearbeiter, der für die Erzeugung und Änderung von dessen Konstruktion verantwortlich ist, verbindet,
- und eine weitere Tabelle, die jeden Bearbeiter mit einer E-mail-Adresse verbindet.

Das erfindungsgemäße Verfahren sieht vor, dass ein Teil-Objekt des physikalischen Objekts die Rolle des ersten Teil-Objekts und ein Referenzelement des ersten Teil-Objekts die Rolle des ersten Referenzelements einnimmt. Für dieses erste Referenzelement werden erfindungsgemäß Ziel-Objekte ermittelt. Ein systematisches Vorgehen ist es, dieses Verfahren für alle Referenzelemente durchzuführen. Vorzugsweise wird das erfindungsgemäße Verfahren wiederholt durchgeführt, und zwar mindestens einmal für jedes Teil-Objekt des physikalischen Objekts und einmal für jedes Referenzelement des Teil-Objekts, wobei jedes Teil-Objekt mindestens einmal die Rolle des ersten Teil-Objekts und jedes Referenzelement mindestens einmal die Rolle des ersten Referenzelements einnimmt.

Durch eine Fortbildung der Ausgestaltung werden alle Referenzelemente aufgelistet, für die kein Ziel-Objekt ermittelt wurde. Die Benennung dieser Referenzelemente liefert Hinweise darauf, an welchen Stellen die Konstruktionen der Teil-Objekte des physikalischen Objekts noch unvollständig oder widersprüchlich sind.

Die bisherigen Ausgestaltungen der Erfindungen ermitteln

Ziel-Objekte für das gegebene erste Referenzelement. Insbesondere für die Toleranzplanung ist es darüber hinaus wichtig zu wissen, auf welche Messungen am physikalischen Objekt das erste Referenzelement welchen Einfluß hat. Eine Ausgestaltung lehrt, wie diese Information erzeugt wird. Für das weitere Referenzelement ist eine Form-, Lage- oder Maßtoleranz festgelegt. Die Konstruktion des physikalischen Objekts umfaßt Informationen über mindestens eine Messung am physikalischen Objekt. Falls das erste mit dem weiteren Referenzelement kompatibel ist, so werden folgende nachfolgenden Schritte durchgeführt:
- Eine Toleranzsimulation wird durchgeführt, in der das weitere Referenzelement und die Messung berücksichtigt werden.
- Zusätzlich werden die Ergebnisse dieser Toleranzsimulation erfaßt.
- Aus den erfaßten Ergebnissen wird ermittelt, auf welche Messungen am physikalischen Objekt das weitere Referenzelement einen Einfluß hat.
- Daraus wird abgeleitet, auf welche Messungen am physikalischen Objekt das erste Referenzelement einen Einfluß hat.

Ein Verfahren zur Fertigungsplanung nutzt das erfindungsgemäße Verfahren, um eine durchgängige Prozeßkette zu realisieren. Im einzelnen werden dabei folgende Schritte durchgeführt:
- Für das physikalische Objekt wird eine Stückliste aufgestellt (Schritt i).
- Für das physikalische Objekt wird eine Konstruktion aufgestellt, die Konstruktionen für die Teil-Objekte umfaßt (Schritt ii).
- Gestaltungselemente der Teil-Objekte werden als Teil der Konstruktionen der Teil-Objekte erzeugt, wobei mindestens ein erstes Referenzelement erzeugt wird (Schritt iii).
- Eine Fügereihenfolge wird aufgestellt, die festlegt, in welcher Reihenfolge welche Teil-Objekte unter Verwendung welcher anderen Teil-Objekte zusammengefügt werden (Schritt iv).
- Mindestens einmal wird das erfindungsgemäße Verfahren durchgeführt. Unter den Teil-Objekten, für die eine Konstruktion existiert, wird dabei nach Ziel-Objekten für das erste Referenzelement gesucht (Schritt v).

Vorzugsweise wird das gerade beschriebene Verfahren für eine Toleranzplanung für das physikalische Objekt verwendet. In Schritt iii werden insbesondere Referenzelemente, Meßpunkte, Messungen sowie Toleranzen für Gestaltungselemente erzeugt. Zwischen den Schritten iv und v wird eine Toleranzsimulation für das physikalische Objekt durchgeführt. In Schritt v wird zusätzlich ermittelt, welche Einflüsse das erste Referenzelement auf welche Teil-Objekte hat.

Vorzugsweise wird das erfindungsgemäße Verfahren mit einer Vorrichtung durchgeführt, die Mittel zum Vergleichen von geometrischen Informationen über Teil-Objekts umfaßt, die das Vergleichen von Referenzelementen ermöglichen.

Das erfindungsgemäße Verfahren kann weiterhin unter Verwendung eines Computerprogramm-Produkts ausgeführt werden, das direkt in den internen Speicher eines Computers geladen werden kann und Softwareabschnitte umfaßt, mit denen ein Verfahren nach einem der Ansprüche 1 bis 11 ausgeführt werden kann, wenn das Produkt auf einem Computer läuft (Anspruch 12). Insbesondere kann dieses Computerprogramm-Produkt auf einem Web Server abgespeichert sein und über das Internet oder über ein Intranet direkt in einen internen Speicher eines Rechner übermittelt werden, wobei der Rechner ein Client ist.

Das erfindungsgemäße Verfahren läßt sich auch unter Verwendung eines Computerprogramm-Produkts ausführen, das auf einem von einem Computer lesbaren Medium gespeichert ist und das von einem Computer lesbare Programm-Mittel aufweist, die den Computer veranlassen, ein Verfahren nach einem der Ansprüche 1 bis 11 auszuführen (Anspruch 13). Das Medium ist beispielsweise eine Menge von Disketten, von CDs, Mini-Disks oder von Tapes oder eine Speichereinheit, die mittels einer Schnittstelle, beispielsweise eines USB-Ports oder einer SCSI-Schnittstelle, mit einem PC verbunden ist.

Im folgenden wird die Erfindung anhand eines in den Zeichnungen dargestellten Ausführungsbeispiels erläutert, dabei zeigen:
- Fig. 1.: ein Flußdiagramm für eine beispielhafte Ausführung des erfindungsgemäßen Verfahrens;
- Fig. 2.: eine Veranschaulichung von Primär-, Sekundär- und Tertiärebene von Teil-Objekten gemäß dem 3-2-1-Prinzip (Stand der Technik);
- Fig. 3.: eine Darstellung für die Angabe von Toleranzen (Stand der Technik);
- Fig. 4.: eine Veranschaulichung einer Fügereihenfolge;
- Fig. 5.: eine Veranschaulichung der Ermittlung eines Ziel-Objekts;
- Fig. 6.: Festlegungen für sechs Bezugspunkte eines Teil-Objekts;
- Fig. 7.: eine Darstellung der erfindungsgemäß erzeugten und weiterer Informationen über ein Bauteil;
- Fig. 8.: eine Darstellung der erfindungsgemäß erzeugten und weiterer Informationen über eine Messung.

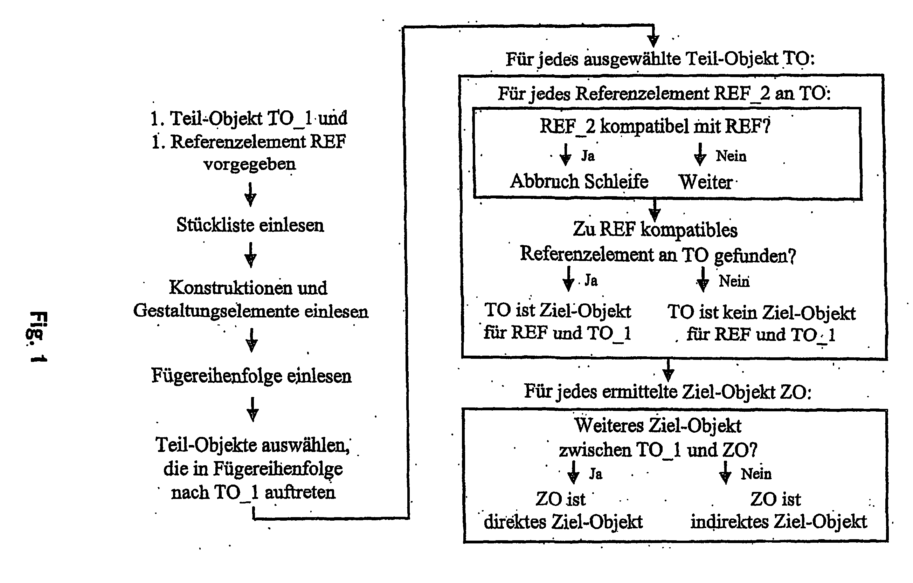

Fig. 1. zeigt ein Flußdiagramm für eine beispielhafte Ausführung des erfindungsgemäßen Verfahrens. Als beispielhafte Anwendungsgebiete dienen die Toleranzplanung oder die Festlegung eines Spann- und Fixierkonzeptes. Die einzelnen Schritte werden im folgenden erläutert.

Das Verfahren zur Auswahl von weiteren Teil-Objekten wird vorteilhafterweise durch ein Computerprogramm auf einer Datenverarbeitungsanlage ausgeführt. Bei der Anwendung des erfindungsgemäßen Verfahrens wird die Auswahl der Teil-Objekte mittels Eingangs-Informationen durchgeführt. Diese Eingangs-Informationen werden zuvor erzeugt und in Datenspeicherungs-Einrichtungen abgespeichert.

Eine Ausgestaltung der Erfindung lehrt einen bestimmten Aufbau dieser Eingangs-Informationen. Diese Eingangs-Informationen, nämlich die CAD-Modelle der Teil-Objekte, die Fügereihenfolge und die Festlegungen der Referenzelemente, sind in folgenden Datenspeicherungs-Einrichtungen abgespeichert:
- Eine erste Datenspeicherungs-Einrichtung enthält Informationen darüber, aus welchen Teil-Objekten das physikalische Objekt aufgebaut ist, sowie mit Verwaltungsinformationen über die Teil-Objekte. Hierzu zählt z. B. die Festlegung, welche Teil-Objekte das weitere physikalische Objekt bilden und welche Teil-Objekte Vorrichtungen sind. Vorzugsweise ist in der ersten Datenspeicherungs-Einrichtung eine Stückliste abgespeichert, die die Teil-Objekte des physikalischen Objekts mitsamt ihren Verwaltungsinformationen auflistet.
- Eine zweite Datenspeicherungs-Einrichtung besteht aus den CAD-Modellen des physikalischen Objekts und derjenigen Teil-Objekte, die in der Stückliste genannt sind. Ein solches CAD-Modell enthält geometrische Informationen über das Teil-Objekt, die die räumliche Ausdehnung und die räumliche Lage des Teil-Objekts umfassen.
- Eine dritte Datenspeicherungs-Einrichtung enthält geometrische Informationen über die Referenzelemente der Teil-Objekte. Insbesondere sind in dieser dritten Datenspeicherungs-Einrichtung eine Kennung und die räumliche Lage jedes Referenzelements und zusätzlich die räumliche Orientierung jeder Referenzfläche enthalten. Die räumliche Orientierung einer Fläche wird z. B. durch einen Normalenvektor angegeben, das ist ein senkrecht auf der Fläche stehender Vektor.
- In einer vierten Datenspeicherungs-Einrichtung ist eine Baumstruktur für die Fügereihenfolge abgespeichert. Diese Fügereihenfolge legt fest, in welcher Reihenfolge welche Teil-Objekte unter Verwendung welcher anderer Teil-Objekte zusammengebaut wird.
- Eine fünfte Datenspeicherungs-Einrichtung enthält die Ergebnisse der Toleranzsimulationen.
- Die erfindungsgemäß erzeugten Informationen, insbesondere über die Auswahl der Teil-Objekte, werden in einer sechsten Datenspeicherungs-Einrichtung abgespeichert.

Die Datenverarbeitungsanlage hat zumindest zeitweise Lesezugriff auf die ersten fünf Datenspeicherungs-Einrichtungen und Schreibzugriff auf die sechste Datenspeicherungs-Einrichtung.

Die Datenspeicherungs-Einrichtungen können insbesondere permanente Datenspeicher oder Hauptspeicher von Datenverarbeitungsanlagen sein. Sie können z. B. alle zu demselben Rechner oder zu verschiedenen Rechnern gehören, die in einem lokalen Rechnernetz oder einem Intranet verbunden sind. Die Datenverarbeitungsanlage hat auf die ersten fünf Datenspeicherungs-Einrichtungen ständig und / oder zeitweise Lesezugriff und auf die sechste Datenspeicherungs-Einrichtung ständig oder zeitweise Schreibzugriff.

Im folgenden wird zunächst beschrieben, mit welchen Informationen die ersten fünf Datenspeicherungs-Einrichtungen gefüllt sind und wie diese Informationen erzeugt werden.

In einem System zum Produkt-Daten-Management (PDM), auch Engineering Data Management (EDM) genannt, wird eine Stückliste eingetragen, die die Information umfaßt, aus welchen Teil-Objekten das physikalische Objekt zusammengesetzt ist. Außerdem werden Verwaltungsinformationen über das physikalische Objekt und seine Teil-Objekte eingetragen.

Eine Konstruktion des physikalischen Objekts und seiner Teil-Objekte wird aufgestellt. Dies geschieht, indem Konstrukteure von jedem Teil-Objekt jeweils ein CAD-Modell aufstellen, und zwar sowohl von Teil-Objekten des weiteren physikalischen Objekts als auch von Vorrichtungen und ihren Bestandteilen. Vom weiteren physikalischen Objekt als ganzes wird ebenfalls ein CAD-Modell aufgestellt, in das die CAD-Modelle seiner Teil-Objekte assoziativ importiert werden. In diesen CAD-Modellen werden die für die Toleranzplanung benötigten Gestaltungselemente beschrieben. "Gestaltungselemente" ist ein Oberbegriff insbesondere für Referenzpunkte, Referenzflächen, Meßpunkte, Abmessungen und Messungen am physikalischen Objekt sowie seinen Teil-Objekten.

Als Teil der Konstruktion werden für die Teil-Objekte Referenzelemente festgelegt. Referenzelemente sind Referenzpunkte und Referenzflächen, das sind insbesondere die Punkte bzw. Flächen, an denen ein Teil-Objekt A des weiteren physikalischen Objekts durch eine Vorrichtung oder ein anderes Teil-Objekt A des weiteren physikalischen Objekts während der Herstellung des weiteren physikalischen Objekts fixiert und / oder aufgenommen wird. Vorzugsweise ist das Teil-Objekt A ein Bauteil und das andere Teil-Objekt B ein Zusammenbau oder eine Vorrichtung.

Um die sechs Freiheitsgrade eines starren Körpers im Raum statisch bestimmt einzuschränken, werden sechs Referenzpunkte benötigt. Die ersten drei Referenzpunkte spannen die Primärebene auf. Die nächsten zwei Referenzpunkte legen die Sekundärebene fest, die senkrecht auf der Primärebene steht. Durch den letzten Referenzpunkt ist die Tertiärebene, die senkrecht zu den beiden anderen Ebenen liegt, definiert. Die Primär-, Sekundär- und Tertiärebene stehen paarweise senkrecht aufeinander. Vorzugsweise sind die drei Ebenen achsenparallel, d. h. die Primärebene steht entweder senkrecht auf der x-Achse oder der y-Achse oder der z-Achse, gleiches gilt für die Sekundär- und Tertiärebene. Die Primär-, Sekundär- und Tertiärebene können aber auch nicht achsenparallel ausgerichtet sein.

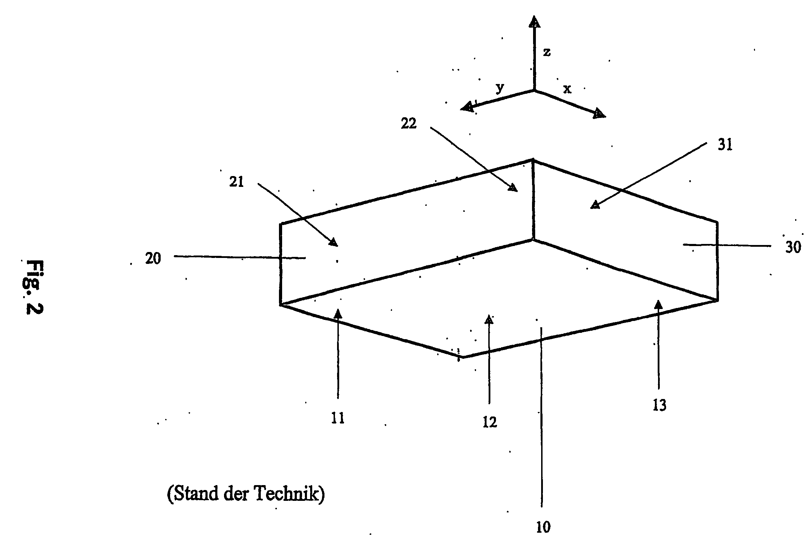

Fig. 2. illustriert die sechs Referenzpunkte und die drei Ebenen gemäß dem 3-2-1-Prinzip. Die Primärebene ist mit 10 bezeichnet, die Sekundärebene mit 20 und die Tertiärebene mit 30. Die Referenzpunkte 11, 12 und 13 spannen die Primärebene 10 auf, die Referenzpunkte 21 und 22 die Sekundärebene 20 und der Referenzpunkt 31 die Tertiärebene 30.

Durch welches weitere Teil-Objekt das Teil-Objekt A in einem bestimmten Referenzpunkt fixiert wird, braucht nicht festgelegt zu werden. Diese Information wird vielmehr automatisch durch das erfinderische Verfahren ermittelt, indem Ziel-Objekte ausgewählt werden. Dieses weitere Teil-Objekt ist das direkte Ziel-Objekt für das Teil-objekt A und einem vorgegebenen Referenzelement. Das Verfahren findet vorzugsweise darüber hinaus indirekte Ziel-Objekte, das sind die Teil-Objekte, die ihrerseits das direkte Ziel-Objekt aufnehmen.

Kommerziell verfügbare CAD-Werkzeuge wie CATIA in Verbindung mit der toleranzspezifischen Applikation "Functional Dimensioning and Tolerancing" erlauben es dem Benutzer, in CAD-Modelle Gestaltungselemente für die Toleranzplanung zu integrieren und die Toleranzen für und weitere Eigenschaften von diesen Gestaltungselementen festzulegen. Insbesondere lassen sich auf diese Weise Referenzpunkte und -flächen modellieren. Beispiele für derartige Referenzpunkte mit Toleranzen sind ein Bezugspunkt mit einer Lagetoleranz in der x-Richtung eines Koordinatensystems und die Abmessung mit einer Toleranz eines Bauteils.

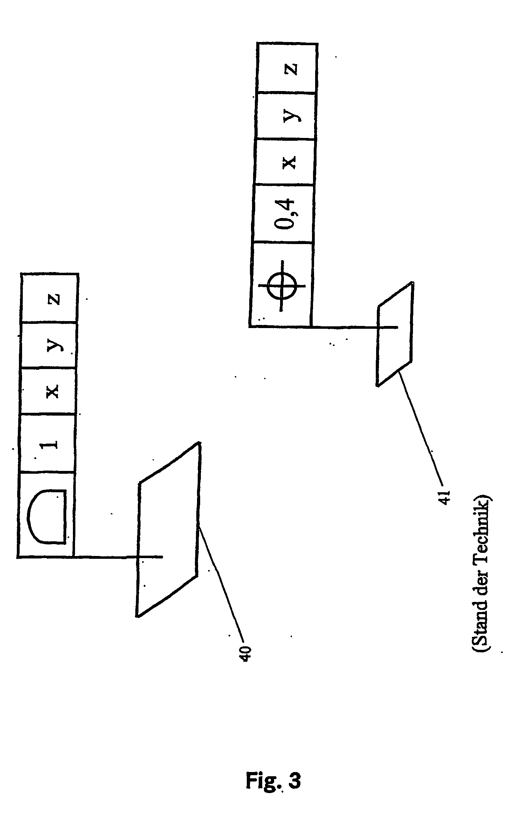

Fig. 3. illustriert eine übliche Darstellung der Toleranz des Profils einer Fläche 40 (links) sowie der Toleranz einer Position 41 (rechts). Das Profil der realen Fläche muß innerhalb zweier idealer paralleler Flächen mit dem Abstand 1mm liegen. Die Position des Punktes hat eine Toleranz von jeweils ±0,2 mm, also insgesamt von 0,4 mm, in x-, y- und z-Richtung.

In die CAD-Modelle werden außerdem Festlegungen von Messungen integriert. Zu den Messungen gehören insbesondere Punktmessungen in x-Richtung, in y-Richtung, in z-Richtung, Spalt-, Winkel-, Versatz- und Abstandsmessungen. Für jede Messung wird festgelegt, welche Meßpunkte zu dieser Messung gehören.

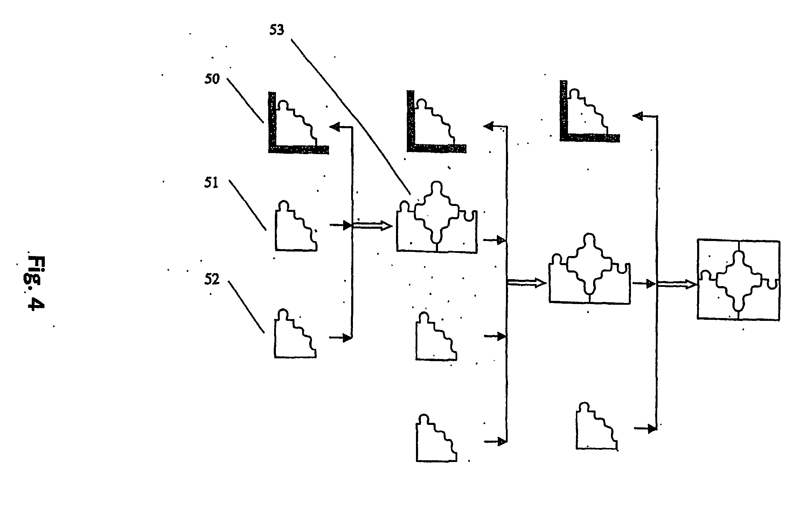

Als nächstes wird die Fügereihenfolge festgelegt. Die Fügereihenfolge ist eine Baumstruktur, die angibt, in welcher Reihenfolge das weitere physikalische Objekt aus Teil-Objekten, insbesondere aus Bauteile und Zusammenbauten, zusammengesetzt wird und wann welche Vorrichtungen verwendet werden. In der Regel ist die Fügereihenfolge mehrstufig, weil aus den Bauteilen Zusammenbauten und aus diesen Zusammenbauten andere Zusammenbauten hergestellt werden und aus diesen schließlich das weitere physikalische Objekt. Fig. 4. zeigt eine derartige Fügereihenfolge. In diesem Beispiel werden zuerst das Bauteil 52 und dann das Bauteil 51 in der Aufnahmevorrichtung 50 fixiert und anschließend die beiden Bauteile 51 und 52 dauerhaft zum Zusammenbau 53 zusammengefügt.

Kommerzielle Werkzeuge zur Toleranzsimulation ermöglichen es einem menschlichen Bearbeiter, eine derartige Fügereihenfolge aufzustellen. Vorteilhafterweise hat das Werkzeug zum Aufstellen der Fügereihenfolge Lesezugriff auf eine Datenspeicherungs-Einrichtung, der eine Stückliste oder sonst eine Auflistung aller Teil-Objekte des physikalischen Objekts umfaßt. Diese Auflistung läßt sich automatisch aus dem System zum PDM oder den CAD-Modellen erzeugen.

Nachdem die CAD-Modelle mit den Gestaltungselementen und Messungen erzeugt und die Fügereihenfolge festgelegt ist, besteht der nächste Schritt darin, eine Toleranzsimulation durchzuführen. Der Fachmann kennt kommerzielle Werkzeuge für Toleranzsimulationen, z. B. "Variation System Analysis (VSA)" von "Engineering Animation, Inc" (http://www.eai.com/products/visvsa/classic vsa.html, abgefragt am 13. 6. 2001) oder "Valisys" von der Firma "Tecnomatix" (http://www.valisys.com/marketing/product-desc.html, abgefragt am 13. 6. 2001). Für jedes toleranzrelevante Gestaltungselement wird ermittelt, welche Auswirkungen die Schwankungen der mit einer Toleranz behafteten Größen auf andere Größen hat. Dies wird in der Regel mit Hilfe von Monte-Carlo-Simulationen mit vielen Simulationsläufen durchgeführt.

Alle mit einer Toleranz behafteten Variablen von Gestaltungselemente von Teil-Objekten, die nicht von anderen Variablen von Gestaltungselemente abhängen, werden als Zufallsvariablen im Sinne der Statistik aufgefaßt. Ein Zufallszahlen-Generator erzeugt gemäß den Wahrscheinlichkeits-Verteilungen der Zufallsvariablen Zahlenwerte innerhalb des zulässigen Streuungsbereichs der Variablen. Welche anderen, abhängigen Variablen durch diese unabhängigen Variablen beeinflußt werden, ist durch die CAD-Modelle der Teil-Objekte sowie der Fügereihenfolge festgelegt. Als Ergebnis der Toleranzsimulation werden vorzugsweise für jede Messung MES_1 mindestens der Mittelwert, die Streuung oder Standardabweichung, ein Histogramm für die Streuung der Messung über dem Wertebereich der Größe, eine gewichtete Auflistung der Einflußfaktoren sowie der cp-Wert und der cpk-Wert geliefert. Ein Einflußfaktor kann eine unabhängige Größe, z. B. die Toleranz eines Referenzpunkts an einer Vorrichtung oder einer Abmessung eines Bauteils, oder eine andere abhängige Größe, z. B. die Toleranz einer anderen Messung, sein. Als Gewichtsfaktor dient eine Prozentzahl, nämlich der maximal mögliche prozentuale Anteil des Einflußfaktors auf die Streuung des Ergebnisses der Messung MES_1.

Um eine derartige Toleranzsimulation durchführen zu können, werden einerseits Informationen über das physikalische Objekt, die Teil-Objekte und die Gestaltungselemente benötigt, andererseits Informationen über die Fügereihenfolge. Dem Fachmann ist das Vorgehen bekannt, dass die CAD-Modelle des physikalischen Objekts, aller Teil-Objekte und aller Gestaltungselemente eingelesen und für die Toleranzsimulation verfügbar gemacht werden. Damit werden viele, insbesondere geometrische, Informationen eingelesen, die für die Toleranzsimulation nicht benötigt werden. Eine vorteilhafte Ausgestaltung sieht vor, zunächst aus den CAD-Modellen die benötigten Informationen über bestimmte Gestaltungselemente zu extrahieren und für die erfindungsgemäße Ermittlung von Ziel-Objekten sowie für die Toleranzsimulation nur diese extrahierten Informationen einzulesen und zu verwenden.

Beim erfindungsgemäßen Verfahren werden die Eingangs-Informationen aus den fünf Datenspeicherungs-Einrichtungen erfaßt. Die Auswahl von Teil-Objekten wird am Beispiel eines Bauteils beschrieben. Sei 1234567 die Sachnummer des Bauteils, für das Ziel-Objekte ausgewählt werden. Das Bauteil 1234567 ist in diesem Beispiel also das erste Teil-Objekt des Verfahrens. Aus der ersten Datenspeicherungs-Einrichtung werden Verwaltungsinformationen über 1234567 erfaßt.

Das erfindungsgemäße Verfahren ermittelt für jeden der sechs Referenzpunkte des Bauteils 1234567 mindestens ein Ziel-Objekt durch Auswahl weiterer Teil-Objekte oder stellt fest, dass es kein Ziel-Objekt gibt. Unter dem Begriff Ziel-Objekt für einen Referenzpunkt REF wird ein weiteres Teil-Objekt (insbesondere ein Zusammenbau oder eine Vorrichtung) verstanden, das das Bauteil 1234567 im Referenzpunkt REF fixiert und / oder aufspannt. Vorzugsweise werden ein direktes Ziel-Objekt ermittelt, das in der Fügereihenfolge das erste Ziel-Objekt nach dem ersten Teil-Objekt ist, sowie indirekte Ziel-Objekte. Zu berücksichtigen ist die Möglichkeit, dass das Bauteil 1234567 durch unterschiedliche Teil-Objekte in seinen verschiedenen Referenzpunkten fixiert wird. Daher ist für jeden Referenzpunkt von 1234567 eine eigene Ermittlung der jeweiligen Ziel-Objekte erforderlich. Jeder Referenzpunkt nimmt bei dieser Ermittlung die Rolle des ersten Referenzelements ein.

Durch Lesezugriff auf die dritte Datenspeicherungs-Einrichtung wird automatisch ermittelt, welche Referenzpunkte zum Bauteil 1234567 gehören. Für jeden dieser Referenzpunkte werden aus den CAD-Modellen mit seinen Gestaltungselementen die Informationen über
- die Art des Gestaltungselements, insbesondere ob es sich um einen Bezugspunkt, Aufnahmepunkt oder eine Bezugs- oder Aufnahmefläche handelt. Für einen Aufnahmepunkt wird weiterhin die Art der Aufnahme ermittelt, z. B. direkte oder indirekte Aufnahme,
- die räumliche Lage des Referenzpunkts, vorzugsweise angegeben durch x-, y- und z-Koordinate,
- die räumliche Orientierung des Bauteils 1234567 im Referenzpunkt, vorzugsweise angegeben durch den Normalenvektor (x-, y- und z-Koordinate) der Oberfläche des Bauteils 1234567 im Referenzpunkt,
- die eingeschränkte Richtung, das ist die Festlegung, in welche Richtung der Referenzpunkt das Bauteil 1234567 einschränkt und ob er zur Primär-, Sekundär- oder Tertiärebene gehört, wobei die Einschränkung vorzugsweise eine in x-Richtung, x-Richtung oder z-Richtung ist,
- und die Toleranz des Referenzpunkts in Bezug auf das Bauteil 1234567
extrahiert.

Die durch den Referenzpunkt eingeschränkte Richtung kann von der räumlichen Orientierung des Bauteils im Referenzpunkt abweichen.

Als Ziel-Objekt für einen Referenzpunkt REF kommt nur ein Teil-Objekt in Frage, das in der Fügereihenfolge nach 1234567 auftritt. Damit legt die Fügereihenfolge fest, welche Teil-Objekte dafür in Betracht kommen, 1234567 im Referenzpunkt REF zu fixieren. Die Teil-Objekte werden in der Abfolge, die durch die Fügereihenfolge gegeben ist, nacheinander mit der räumlichen Lage des Referenzpunktes REF verglichen, beginnend bei dem Teil-Objekt, das in der Fügereihenfolge unmittelbar nach dem Bauteil 1234567 kommt.

Sei 7777777 eine Vorrichtung, die in der Fügereihenfolge nach 1234567 auftritt. Zunächst wird die räumliche Lage von REF mit der räumlichen Lage und Ausdehnung der Vorrichtung 7777777 verglichen. Die räumliche Lage von REF wird vorzugsweise durch eine x-, y- und z-Koordinate in einem Koordinatensystem beschrieben. Die Beschreibung der Ausdehnung und Lage jedes Teil-Objekts wird durch die CAD-Modelle vorgegeben. Der Fachmann kennt verschiedene Verfahren, wie die Geometrie eines Teil-Objekts beschrieben wird. Eine Art der Beschreibung ist die, dass das Teil-Objekt aus elementaren geometrischen Körpern wie Quader und Zylinder aufgebaut wird und andere elementare geometrische Körper subtrahiert werden.

Bei der Suche nach Ziel-Objekten wird beispielsweise geprüft, ob der Referenzpunkt REF innerhalb oder außerhalb jedes dieser Teil-Objekte liegt. Außerdem wird geprüft, ob der Referenzpunkt von der Oberfläche eines Teil-Objekts einen Abstand hat, der nicht größer als eine vorgegebene Schranke ist. Falls der Referenzpunkt REF außerhalb oder auf der Oberfläche der Vorrichtung 7777777 liegt und von der Oberfläche von 7777777 einen Abstand kleiner oder gleich der vorgegebenen Schranke ist, so ist 7777777 ein Kandidat dafür, ein Ziel-Objekt für REF zu sein.

Sei PKT der Punkt auf der Oberfläche von 7777777, der REF am nächsten liegt. Für 7777777 werden beispielsweise die folgenden weiteren Prüfungen durchgeführt, um zu ermitteln, ob 7777777 tatsächlich ein Ziel-Objekt für REF ist:
- Ermittelt wird die räumliche Orientierung, also ein Normalenvektor auf der Oberfläche von 7777777 im Punkt PKT. Für REF ist festgelegt, in welcher Richtung die räumliche Bewegung von 1234567 dadurch eingeschränkt wird, dass 1234567 in REF durch ein anderes Teil-Objekt aufgenommen oder fixiert wird. Die Richtung der Normalenvektor wird mit der eingeschränkten Richtung verglichen. Der Vergleich liefert ein positives Ergebnis, wenn die Abweichung zwischen den beiden Richtungen unter einer vorgegebenen Schranke liegt. Diese Schranke ist z. B. die Materialstärke oder die Wandstärke.
- Für REF ist eine Toleranz vorgegeben. Diese wird mit einer Toleranz für 7777777 in PKT verglichen.
- Für REF ist festgelegt, von welcher Art das Teil-Objekt ist, das 1234567 in REF aufnimmt oder fixiert. Beispielsweise ist festgelegt, dass 1234567 in REF direkt aufgenommen wird. Diese Festlegung wird mit der Art des Teil-Objekts 7777777 verglichen. Da 7777777 eine Vorrichtung ist, nimmt sie Teil-Objekte direkt auf.

Falls beide zusätzlichen Prüfungen positiv verlaufen sind, ist 7777777 ein Ziel-Objekt für REF, ansonsten nicht.

Jedes dergestalt ermittelte Ziel-Objekt für REF wird weiterhin daraufhin geprüft, ob es ein direktes oder indirektes Ziel-Objekt für REF ist. Bei der Prüfung für 7777777 wird geprüft, ob in der Fügereihenfolge zwischen 1234567 als dem ersten Teil-Objekt und dem Ziel-Objekt 7777777 ein weiteres Ziel-Objekt auftritt oder nicht. Tritt keines auf, ist 7777777 ein direktes Ziel-Objekt für 1234567.

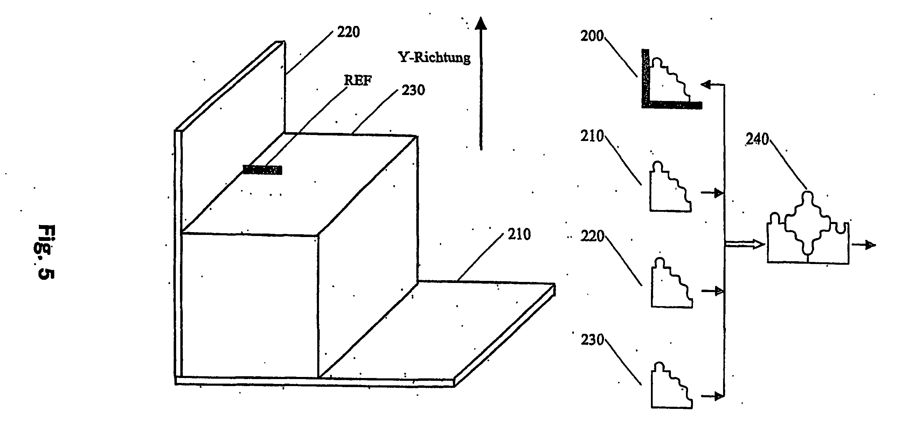

In manchen Situationen können durch eine bestimmte Ausgestaltung der Erfindung Vergleiche von räumlichen Lagen und Ausdehnungen eingespart werden, was insbesondere Rechenzeit einspart. Die Ausgestaltung wird durch ein Beispiel mit Hilfe der Fig. 5. illustriert, die einen Ausschnitt aus einer Fügereihenfolge zeigt.

Im Beispiel ist REF ein Referenzpunkt am Bauteil 230, der die Rolle des ersten Referenzelements übernimmt. Den Informationen über den Referenzpunkt wird entnommen, dass REF die Bewegung des Bauteils 230 in y-Richtung einschränkt (2. Punkt Primärebene) und ein Referenzpunkt für indirekte Aufnahme ist. Indirekte Aufnahme bedeutet: Das Bauteil 230 wird über ein anderes Bauteil und nicht direkt über die Vorrichtung 200 aufgenommen. Die Bauteile 210, 220 und 230 werden zum Zusammenbau 240 zusammengefügt. Aus diesen Informationen und aus der Fügereihenfolge wird automatisch gefolgert, dass als direktes Ziel-Objekt für REF nur die Bauteile 210 und 220 in Frage kommen. Die räumliche Lage von REF wird daher nur mit der räumlichen Lage und der räumlichen Ausdehnung des Bauteils 210 und der des Bauteils 220 verglichen.

Eine Weiterbildung der Erfindung sieht vor, dass REF zunächst mit weiteren vorgegebenen Referenzelementen an weiteren Teil-Objekten verglichen wird. Diese weiteren Referenzelemente sind in der dritten Datenspeicherungs-Einrichtung abgespeichert. Beispielsweise werden nacheinander die Referenzelemente aller weiteren Teil-Objekte ermittelt, die in der Fügereihenfolge nach dem ersten Teil-Objekt 1234567 auftreten. Jedes dieser weiteren Referenzelemente wird mit dem ersten Referenzelement REF hinsichtlich Kompatibilität verglichen. Jedesmal, wenn ein kompatibles weiteres Referenzelement gefunden wird, wird das weitere Teil-Objekt, zu dessen Konstruktion das kompatible weitere Referenzelement gehört, als ein Ziel-Objekt für REF markiert.

Sei 7777777 eine Vorrichtung, die in der Fügereihenfolge nach dem Bauteil 1234567 auftritt. Sei REF_2 ein weiterer Referenzpunkt der Konstruktion von 7777777. Beispielsweise durch die folgenden Einzel-Prüfungen wird geprüft, ob REF_2 mit dem ersten Referenzelement REF kompatibel ist:
- Festgelegt ist, von welcher Art REF und von welcher REF_2 ist. Insbesondere ist festgelegt, ob REF ein Bezugspunkt, Aufnahmepunkt, Bezugsfläche oder Aufnahmefläche für direkte oder indirekte Aufnahme ist, und für REF_2 ist das entsprechende festgelegt. Falls die beiden Arten übereinstimmen, so liefert diese Einzel-Prüfung ein positives Ergebnis.
- Die räumliche Lage von REF wird mit der von REF_2 verglichen. Falls ihr Euklidischer Abstand nicht größer als eine vorgegebene Schranke ist, liefert diese Einzel-Prüfung ein positives Ergebnis. Zusätzlich kann ein minimaler Abstand vorgegeben sein, der bei der Einzel-Prüfung berücksichtigt wird.
- Ermittelt wird, welche Richtung ein Normalenvektor hat, der in REF senkrecht auf der Oberfläche des Bauteils 1234567 steht. Weiterhin wird ermittelt, welche Richtung ein Normalenvektor hat, der in REF_2 senkrecht auf der Oberfläche der Vorrichtung 7777777 steht. Die beiden Normalenvektoren werden auf die Länge 1 normiert, sie geben die Orientierungen von 1234567 in REF bzw. von 7777777 in REF_2 an. Falls die beiden Normalenvektoren nicht stärker als eine vorgegebene Schranke voneinander abweichen, liefert diese Einzel-Prüfung ein positives Ergebnis.
- Festgelegt ist, in welcher Richtung die räumliche Bewegung von 1234567 dadurch eingeschränkt wird, dass 1234567 in REF durch ein anderes Teil-Objekt aufgenommen oder fixiert wird. Weiterhin ist festgelegt, in welcher Richtung die Vorrichtung 7777777 die Richtung eines Teil-Objekts einschränkt, das 7777777 in REF_2 aufnimmt oder fixiert. Hierbei werden nur die x-Richtung, y-Richtung und z-Richtung unterschieden. Die beiden für REF und REF_2 festgelegten Richtungen werden miteinander verglichen. Stimmen sie überein, liefert diese Einzel-Prüfung ein positives Ergebnis.
- Der Normalenvektor auf der Oberfläche von 1234567 in REF wird mit der Richtung verglichen, in der 7777777 die räumliche Bewegung eines in REF_2 aufgenommenen Teil-Objekts einschränkt. Weicht die eingeschränkte Richtung nicht stärker als eine vorgegebene Schranke vom Normalenvektor ab, so liefert diese Einzel-Prüfung ein positives Ergebnis.
- Der Normalenvektor auf der Oberfläche von 7777777 in REF_2 wird mit der Richtung verglichen, in der die räumliche Bewegung von 1234567 dadurch eingeschränkt wird, dass 1234567 in REF durch ein weiteres Teil-Objekt aufgenommen wird. Weicht die eingeschränkte Richtung nicht zu stark vom Normalenvektor ab, so liefert diese Einzel-Prüfung ein positives Ergebnis.

Einzel-Prüfungen werden nacheinander so lange durchgeführt, bis entweder alle Einzel-Prüfungen mit positivem Ergebnis durchgeführt sind - dann sind die beiden Referenzelemente miteinander kompatibel - oder bis eine Einzel-Prüfung ein negatives Ergebnis liefert - dann sind die beiden Referenzelemente nicht miteinander kompatibel, und weitere Einzel-Prüfungen für diese beiden Referenzelemente an diesen Teil-Objekten werden nicht durchgeführt.

Bei den oben beschriebenen Prüfungen können ein oder mehrere kompatible Referenzelemente gefunden werden. Möglich ist aber auch, dass gar keine kompatiblen Referenzelemente gefunden werden. In diesem Fall wird bevorzugt automatisch ein kompatibles Referenzelement erzeugt - oder festgestellt, dass dies nicht möglich ist. Hierfür wird zunächst wie oben beschrieben zunächst ein direktes Ziel-Objekt und dann der Punkt PKT auf der Oberfläche des direkten Ziel-Objekts ermittelt, der dem ersten Referenzelement REF am nächsten kommt. Probeweise wird ein Referenzelement REF_2 erzeugt, dessen räumliche Lage mit der von PKT übereinstimmt und das von der gleichen oder einer kompatiblen Art wie REF ist. Die oben beschriebenen Einzel-Prüfungen werden für REF und REF_2 durchgeführt. Verlaufen sie alle positiv, so wurde ein kompatibles Referenzelement automatisch erzeugt. Erbringt eine Einzel-Prüfung ein negatives Ergebnis, so ist damit ermittelt, dass kein mit REF kompatibles Referenzelement erzeugt werden kann.

Eine Ausgestaltung der Erfindung (Ansprüche 5 bis 8) lehrt, wie die Gestaltungselemente und damit Referenzelemente mit eindeutigen Gesamt-Kennungen versehen werden. Die Ausgestaltung sieht eine Nomenklatur für die Gestaltungselemente vor. Um die für die Toleranzplanung oder für die Festlegung eines Spann- und Fixierkonzeptes benötigten Informationen schnell und effizient erzeugen zu können, werden die Teil-Objekte und Gestaltungselemente in erfinderischer Weise mit Gesamt-Kennungen versehen. Diese Gesamt-Kennungen kennzeichnen die Teil-Objekte und Gestaltungselemente eindeutig. Sie werden automatisch ausgewertet, um die Informationen über Teil-Objekte und Gestaltungselemente zu erzeugen.

Die Gesamt-Kennung eines Teil-Objekts wird aus einer eindeutigen Identifizierung - vorzugsweise der Sachnummer - sowie einer Kennzeichnung zusammengesetzt, die angibt, ob es sich um ein Bauteil, Zusammenbau, eine Vorrichtung oder ein sonstiges Teil-Objekt handelt. Beispielsweise steht A für ein Bauteil, Z für einen Zusammenbau und V für eine Vorrichtung.

Die Gesamt-Kennung eines Gestaltungselements und damit eines Referenzelements wird aus folgenden Informationen zusammengesetzt:
- der Kennung des Teil-Objekts, zu dessen Konstruktion das Gestaltungselement gehört,
- eine Kennzeichnung, von welcher Art das Gestaltungselement ist - hierdurch werden insbesondere Referenzpunkte, Referenzflächen, Meßpunkte, Messungen, Abmessungen unterschieden,
- und bei Bedarf eine Kennzeichnung, um das Gestaltungselement von gleichartigen Gestaltungselementen der Konstruktion desselben Teil-Objekts zu unterscheiden, also um z. B. unterschiedliche Referenzpunkte oder Abmessungen desselben Bauteils zu unterscheiden.

Für einen Referenzpunkt wird daher darüber hinaus in seiner Gesamt-Kennung angegeben,
- in welcher Richtung (x-Richtung, y-Richtung oder z-Richtung) er die räumliche Bewegung des Bauteils einschränkt,
- ob er zur Primärebene, Sekundärebene oder Tertiärebene gehört
- und von welcher Art der Referenzpunkt ist, z. B. Loch, Langloch oder sonstiger Punkt zur Aufnahme eines Bauteils oder Zusammenbaus oder aber ein Punkt zur Ausrichtung oder Ausmittlung. In der Kennung wird außerdem unterschieden, ob der Referenzpunkt einer für direkte oder indirekte Aufnahme von Teil-Objekten ist. Eine direkte Aufnahme eines Bauteils ist eine Aufnahme in einer Vorrichtung, indirekte Aufnahme ist eine durch ein anderes Bauteil oder durch einen Zusammenbau.

Zwei Beispiele für die Gesamt-Kennungen:
- Ein Loch am Bauteil mit der Sachnummer 1234567, wobei das Loch als Referenzpunkt dient und die räumliche Bewegung des Bauteils in x-Richtung (1. Punkt Sekundärebene, daher 4. Einschränkung) und z-Richtung (Tertiärebene) einschränkt, erhält die Gesamt-Kennung A1234567_L_I_X4Z6. A ist hierbei die Kennzeichnung für ein Bauteil, L die für ein Loch und I für indirekte Aufnahme.
- Ein Referenzpunkt an der Aufspannvorrichtung V1212121, der die räumliche Bewegung eines aufgenommenen Bauteils in y-Richtung (1. Punkt Primärebene, daher 1. Einschränkung) einschränkt, erhält die Gesamt-Kennung V1212121_F_S_Y1. F kennzeichnet hierbei einen Aufnahmepunkt, S eine direkte Aufnahme.

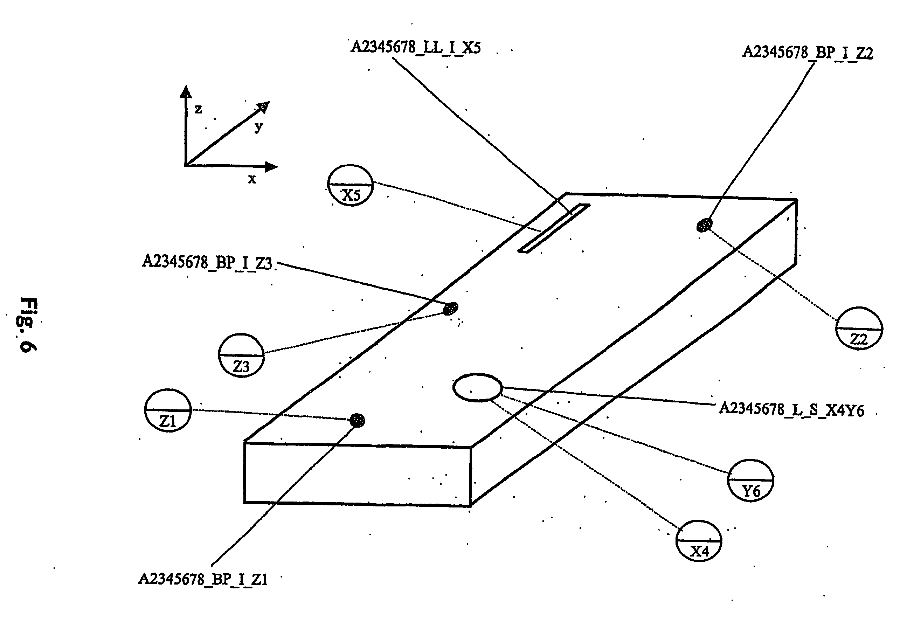

Fig. 6. zeigt ein Beispiel für sechs Bezugspunkte eines Quaders mit der Bezeichnung A2345678, nämlich ein Langloch mit einem und ein Loch mit zwei Bezugspunkten sowie drei weitere Bezugspunkte. LL kennzeichnet ein Langloch, L ein Loch und BP einen sonstigen Bezugspunkt. Die Primärebene ist die z-Ebene, die Sekundärebene die x-Ebene und die Tertiärebene die y-Ebene. Die Kreise, die mit durchgezogenen Linien mit Bezugspunkten verbunden sind, veranschaulichen die Festlegungen für die Bezugspunkte, die gestrichelten Linien führen von den Bezugspunkten zu den erfinderischen Gesamt-Kennungen.

Die Gesamt-Kennung eines Meßpunkts wird wie folgt bestimmt: Sei MP_1 ein Meßpunkt der Konstruktion des Teil-Objekts TO_1. MP_1 gehöre zu einer Messung MES mit zwei Meßpunkten MP_1 und MP_2. Sei MP_2 ein Meßpunkt der Konstruktion des Teil-Objekts TO_2, TO_2 = TO_1 ist möglich. Die Gesamt-Kennung von MP_1 wird aus folgenden Informationen zusammengesetzt:
1. der Kennung von TO_1,
2. die Kennzeichnung, dass MP_1 ein Meßpunkt ist und von welcher Art die Messung MES ist,
3. falls die Konstruktion von TO_1 mehrere Meßpunkte umfaßt: eine lokale Kennzeichnung, die MP_1 von anderen Meßpunkten der Konstruktion von TO_1 unterscheidet, z. B. eine laufende Nummer für alle Meßpunkte der Konstruktion von TO_1,
4. der Kennung von TO_2,
5. falls die Konstruktion von TO_2 mehrere Meßpunkte umfaßt: eine lokale Kennzeichnung, die MP_2 von anderen Meßpunkten an TO_2 unterscheidet,

Die 3. und die 5. Kennzeichnung sind zwei lokale, denn sie sind nur innerhalb von TO_1 bzw. TO_2 eindeutig.

Falls der Meßpunkt MP_1 außerdem zu einer weiteren Messung gehört, wird die Gesamt-Kennung von MP_1 entsprechend um die Kennungen eines weiteren Teil-Objekts TO_3 und um lokale Kennzeichnungen für Meßpunkte der Konstruktion von TO_3 erweitert.

Falls zu MES nur ein Meßpunkt MP_1 gehört, wird die Gesamt-Kennung für MP_1 nur aus den ersten drei Informationen zusammengesetzt. Eine Punktmessung in y-Richtung ist ein Beispiel für eine Messung mit nur einem Meßpunkt.

Die Funktionalitäten heute kommerziell verfügbarer CAD-Werkzeuge ermöglichen es den Produktgestaltern, von Hand Messungen in CAD-Modelle zu integrieren. Verschiedene Bereiche, die an der Produktgestaltung und -herstellung beteiligt sind, beispielsweise Qualitätsmanagement, Produktionsplanung, Preßwerk, Rohbau und Service, legen fest, welche Meßpunkte zu dieser Messung gehören. Eine weitere Ausgestaltung der Erfindung sieht aber vor, dass Gestaltungselemente für Messungen automatisch erzeugt werden. Hierzu werden Informationen über Meßpunkte, insbesondere die Gesamt-Kennungen der Meßpunkte, sowie Informationen über die Fügereihenfolge ausgewertet. Dies wird im folgenden näher beschrieben.

Seien MP_1 und MP_2 die beiden Meßpunkte einer Messung MES. Wie oben beschrieben, umfaßt die Gesamt-Kennung des Meßpunktes MP_1 der Konstruktion des Teil-Objekts TO_1 die Kennung eines Teil-Objekts TO_2 und eine lokale Kennzeichnung, die MP_2 von anderen Meßpunkten der Konstruktion von TO_2 unterscheidet. Außerdem läßt sich der Gesamt-Kennung von MP_1 automatisch entnehmen, von welcher Art die Messung MES ist - insbesondere, ob MES eine Punktmessung in x-Richtung, in y-Richtung, in z-Richtung, eine Spalt-, Winkel-, Versatz- oder Abstandsmessung ist.

Die Gesamt-Kennung von MP_1 wird ausgewertet. Ein Gestaltungselement für die Messung MES wird automatisch erzeugt. Unter den Meßpunkten der Konstruktion von TO_2 wird MP_2 ausgewählt. Als nächstes wird das Teil-Objekt automatisch ermittelt, an dem die Messung MES ausgeführt wird und dessen Konstruktion damit das Gestaltungselement für MES zugeordnet wird. Hierzu werden in der Baumstruktur für die Fügereihenfolge die Knoten für TO_1 und TO_2 identifiziert, und der erste Knoten in der Fügereihenfolge wird gesucht, der nach TO_1 und nach TO_2 kommt und daher für das erste Teil-Objekt TO in der Fügereihenfolge steht, in dem TO_1 und TO_2 gemeinsam auftreten. Das automatisch generierte Gestaltungselement für MES wird der Konstruktion des Teil-Objekts TO zugeordnet. Die Gesamt-Kennung von MES wird aus folgenden Informationen zusammengesetzt:
- der Kennung von TO,
- die Kennzeichnung, von welcher Art die Messung MES ist,
- der Kennung von TO_1,
- die lokale Kennzeichnung von MP_1,
- der Kennung von TO_2
- und die lokale Kennzeichnung von MP_2.

Ein Beispiel: Seien TO_1 und TO_2 zwei Bauteile mit den Sachnummern 1234567 bzw. 7654321. Seien 1 und 3 die beiden lokalen Kennzeichnungen für MP_1 an TO_1 bzw. MP_2 an TO_2. Sei S die Kennzeichnung für eine Spaltmessung. Sei 1425364 die Sachnummer des Zusammenbaus, dem die Messung zugeordnet ist. Das Gestaltungselement für die Spaltmessung zwischen MP_1 und MP_2 erhält die Gesamt-Kennung
Z1425364_S_A1234567_1_A7654321_3.

Bei der Generierung eines Gestaltungselements für eine Messung werden automatisch mehrere Prüfungen auf Widerspruchsfreiheit (Konsistenz) durchgeführt, nämlich:
- Die Gesamt-Kennung von MP_1 umfaßt die Kennung von TO_2 sowie eine lokale Kennzeichnung, die MP_2 von anderen Meßpunkten der Konstruktion von TO_2 unterscheidet. Umfaßt umgekehrt die Gesamt-Kennung von MP_2 die Kennung von TO_1 und eine lokale Kennzeichnung für MP_1?
- Gehört umgekehrt zur Gesamt-Kennung von MP_2 die gleiche Kennzeichnung für die Art der Messung? Ein Beispiel: Sei in der Gesamt-Kennung von MP_1 vermerkt, dass MP_1 ein Meßpunkt einer Spaltmessung ist. Ist in der Gesamt-Kennung von MP_2 vermerkt, dass MP_2 ebenfalls zu einer Spaltmessung gehört?

Das obige Vorgehen, wie ein Gestaltungselement für eine Messung erzeugt wird, ist erforderlich, wenn MES eine Messung mit zwei Meßpunkten ist. Wenn zu MES nur ein Meßpunkt gehört (z. B. bei einer Punktmessung in x-Richtung), wird die Gesamt-Kennung von MP_1 lediglich aus folgenden Informationen zusammengesetzt:
- die Kennung von TO_1,
- die lokale Kennzeichnung von MP_1
- und die Kennzeichnung, von welcher Art die Messung MES ist.

Das Gestaltungselement für MES wird aus diesen Informationen erzeugt und der Konstruktion des Teil-Objekts TO_1 zugeordnet.

Den automatisch erzeugten Gestaltungselementen für Messungen werden weitere Informationen zugeordnet. Den CAD-Modellen mit den Meßpunkten der Messung wird automatisch der Sollwert jeder Messung entnommen, z. B. als Abstand zwischen zwei Meßpunkten oder als Sollwert eines Meßpunkts. Menschliche Bearbeiter legen Toleranzen für Messungen fest.

In der oben beschriebenen Ausführungsform wurde die räumliche Lage des Referenzpunktes REF mit der räumlichen Lage und Ausdehnung von weiteren Teil-Objekten verglichen. Eine weitere Ausgestaltung besteht daraus, dass in der dritten Datenspeicherungs-Einrichtung nicht nur die räumliche Lage und Ausdehnung von weiteren Teil-Objekten abgespeichert sind, sondern auch vorgegebene weitere Referenzelemente an diesen weiteren Teil-Objekten. Der erste Referenzpunkt REF wird mit den weiteren Referenzelementen verglichen. Falls dabei ein Referenzelement REF_2 gefunden wird, das mit dem Referenzpunkt REF kompatibel ist, wird als ein Ziel-Objekt das weitere Teil-Objekt ermittelt, dessen Konstruktion das Referenzelement REF_2 umfaßt.

Wird die Ausgestaltung auf das durch Fig. 5. illustrierte Beispiel angewendet, so wird aus den Informationen über REF und der Fügereihenfolge gefolgert, dass REF nur mit einem weiteren Referenzelement am Bauteil 210 oder 220 kompatibel sein kann. Die Suche wird daher auf diejenigen Referenzpunkte an den Bauteilen 210 und 220 beschränkt, die die Bewegung eines aufgenommenen Bauteils in y-Richtung einschränken und die eine indirekte Aufnahme sind. Im günstigsten Fall braucht nicht ein einziges Mal eine räumliche Lage, Orientierung oder Ausdehnung berücksichtigt zu werden, um das direkte Ziel-Objekt und einen kompatiblen Referenzpunkt zu finden.

In der zuletzt beschriebenen Ausgestaltung waren Referenzelemente an den weiteren Teil-Objekten vorgegeben. Durch diese Ausgestaltung des erfindungsgemäßen Verfahrens werden kompatible Referenzelemente an Ziel-Objekten gefunden - oder festgestellt, dass derartige Referenzelemente nicht existieren. Alternativ hierzu ist es möglich, automatisch ein Referenzelement als Teil der Konstruktion eines weiteren Teil-Objekts zu erzeugen, falls ein Ziel-Objekt für das erste Referenzelement ermittelt wird (Anspruch 10).

Dies wird am durch Fig. 5. illustrierten Beispiel erläutert. REF ist ein Referenzpunkt am Bauteil 230 für eine indirekte Aufnahme. Z. B. durch Vergleich der geometrischen Lagen und Ausdehnungen wird ermittelt, dass das Bauteil 210 Ziel-Objekt für REF ist. Ein zu REF kompatibler Referenzpunkt REF_1 der Konstruktion des Bauteils 210 wird automatisch erzeugt. Der Konstruktion des Bauteils 230 werden die räumliche Lage von REF und die durch REF eingeschränkte Richtung entnommen. Hieraus werden die räumliche Lage von REF_1 und die durch REF_1 eingeschränkte Richtung abgeleitet. Vorzugsweise wird weiterhin geprüft, ob die räumlichen Orientierungen von REF und REF_1, d. h. die Richtungen der Normalenvektoren auf die Oberflächen der Bauteile 230 und 210, übereinstimmen. Falls hingegen REF ein Referenzpunkt für direkte Aufnahme ist, wird ein zu REF kompatibler Referenzpunkt erzeugt und der Konstruktion der Vorrichtung 200 zugeordnet.

Eine weitere Ausgestaltung der Erfindung sieht vor, für ein Referenzelement eine Gesamt-Kennung zu vergeben, aus der hervorgeht, mit welchem weiteren Referenzelement das erste Referenzelement kompatibel ist (Anspruch 8). Diese Ausgestaltung wird an am Beispiel eines Bauteils, das u. a. durch eine Aufnahmevorrichtung fixiert wird, erläutert:

Das erste Teil-Objekt ist das Bauteil mit der mit der Sachnummer 1234567. Das erste Referenzelement ist ein Referenzpunkt REF_1 der Konstruktion des Bauteils 1234567. Das weitere Teil-Objekt ist die Aufspannvorrichtung mit der Sachnummer 1010101. Das weitere Referenzelement ist ein Referenzpunkt REF_2 der Konstruktion der Vorrichtung 1010101.

Erfindungsgemäß ermittelt wird, dass die Vorrichtung 1010101 das direkte Ziel-Objekt für das Bauteil 1234567 und dem Referenzelement REF ist. Der erste Referenzpunkt REF ist mit dem weiteren Referenzpunkt REF_2 kompatibel, was ebenfalls erfindungsgemäß ermittelt wird.

Für diese Referenzelemente werden wie folgt Gesamt-Kennungen vergeben:
- Das CAD-Modell des Bauteils 1234567 umfaßt den ersten Referenzpunkt REF, der gemäß der Ausgestaltung nach Anspruch 5 oder Anspruch 8 die Gesamt-Kennung A1234567_F_S_Y4 hat. Dieser Kennung ist zu entnehmen, dass der Referenzpunkt zum Konstruktion des Bauteils 1234567 gehört, aber nicht, welche Ziel-Objekte dieser Referenzpunkt hat.
- Das CAD-Modell und damit die Konstruktion der Aufspannvorrichtung 1010101 umfaßt den weiteren Referenzpunkt REF_2, der zunächst die Gesamt-Kennung V1010101_F_S_Y4 hat.
- In der Ausgestaltung nach Anspruch 6 wird die Gesamt-Kennung des weiteren Referenzpunktes REF_2 erweitert, so dass der neuen Gesamt-Kennung entnommen werden kann, zur Konstruktion welcher Vorrichtung der Aufnahmepunkt gehört (nämlich V1010101), welches Bauteil aufgenommen wird (nämlich A1234567) und wie die räumliche Bewegung des Bauteils A1234567 durch den Aufnahmepunkt eingeschränkt wird. Die neue Gesamt-Kennung ist daher V1010101_F_S_Y4_A1234567.

Die Information, welches Teil-Objekt das Bauteil 1234567 in einem bestimmten Aufnahmepunkt aufnimmt und fixiert, läßt sich auf den erfinderischen Gesamt-Kennungen von erstem und weiterem Referenzpunkt automatisch wieder herstellen, ohne dass erneut die Koordinaten von Referenzpunkten mit den Geometrien von Teil-Objekten verglichen werden müssen. Sei A1234567_F_S_Y4 die Kennung eines Gestaltungselements. Der Kennung ist zu entnehmen, dass es sich um einen Referenzpunkt der Konstruktion des Bauteils A1234567 handelt. Sei V1010101_F_S_Y4_A1234567 die Kennung eines weiteren Gestaltungselements. Dieser Kennung ist automatisch zu entnehmen, dass das Gestaltungselement
- ein Aufnahmepunkt der Konstruktion der Vorrichtung 1010101 ist,
- das Bauteil 1234567 aufnimmt,
- mit dem Referenzpunkt_4 der Konstruktion des Bauteils 1234567 übereinstimmt und
- dessen räumliche Bewegung in y-Richtung einschränkt.

Durch diese Ausgestaltung mit den erfinderischen Gesamt-Kennungen wird somit Rechenzeit eingespart und weniger Rechenleistung benötigt, wenn das Verfahren zur Ermittlung von Ziel-Objekten mehrmals durchgeführt wird. Nur bei der ersten Ausführung des Verfahrens brauchen geometrische Informationen verglichen zu werden, bei weiteren Ausführungen werden Gesamt-Kennungen verglichen. Vorzugsweise wird bei einer erneuten Ausführung verifiziert, ob das Referenzelement, das gemäß der Gesamt-Kennung nach Anspruch 19 oder 20 kompatibel zum ersten Referenzelement ist, tatsächlich kompatibel ist oder etwa durch Abänderung der räumlichen Lage, Orientierung oder eingeschränkten Richtung gegenüber der ersten Ausführung des Verfahrens nicht mehr kompatibel geworden ist.

In der zuletzt beschriebenen Ausführungsform wurden Informationen über Zusammenhänge zwischen Teil-Objekten und Gestaltungselementen mit Hilfe von Kennungen rechnerverfügbar gemacht. Diese Form stellt die Informationen kompakt dar, und sie können von Systemen für CAD, PDM und Toleranzsimulation ohne Zusatzaufwand eingelesen und verarbeitet werden. Der Fachmann kennt weitere Techniken, um derartige Zusammenhänge einer Datenverarbeitungsanlage verfügbar zu machen, z. B. Techniken der objektorientierten Systemanalyse, wie Structured Analysis, semantische Netze, Entity-Relationship-Models, eXtended Markup Language und Unified Modeling Language, und Techniken der objektorientierten Programmierung wie Verzeigerungen zwischen Software-Objekten in Programmiersprachen wie Java und C++.

Erfindungsgemäß wird automatisch ermittelt, durch welche weiteren Teil-Objekte ein bestimmtes erstes Teil-Objekt in seinen Referenzpunkten fixiert wird. Die zugehörigen Referenzpunkte der Konstruktionen der aufnehmenden Teil-Objekte werden automatisch gefunden. Die Erfindung lehrt weiterhin, wie für jeden Referenzpunkt der Konstruktion des ersten Teil-Objekts die Information ermittelt wird, auf welche Messungen die Festlegungen für diesen Referenzpunkt, insbesondere die räumliche Lage, die räumliche Orientierung und Toleranz, welchen Einfluß haben. Automatisch ermittelt werden diejenigen Messungen, auf die der Referenzpunkt_4 am Bauteil 1234567 einen Einfluß hat. Hierfür werden aus der fünften Datenspeicherungs-Einrichtung die Ergebnisse von Toleranzsimulationen eingelesen und ausgewertet. Die Ergebnisse umfassen eine Auflistung der Einflußfaktoren und eine Kennzeichnung der Gewichtungen der Einflußfaktoren. Automatisch werden diejenigen Messungen herausgefiltert, in denen das Gestaltungselement A1234567_F_Y4 oder das Gestaltungselement
Z1010101_F_Y4_A1234567 als Einflußfaktoren auftreten. Dadurch sind alle Messungen ermittelt, auf die die Festlegungen für Referenzpunkt 4 einen Einfluß haben. Zweckmäßigerweise werden die beeinflußten Messungen durch eine Gewichtung für die Stärke des Einflusses, den Referenzpunkt_4 auf die Messungen hat, bewertet. Diejenigen Messungen lassen sich herausfiltern, auf die Referenzpunkt_4 einen Einfluß hat, der einen vordefinierten Grenzwert, z. B. 50%, übersteigt.

Als nächstes wird ermittelt, welche Teil-Objekte welchen Einfluß auf Messungen nehmen, an denen das Bauteil 1234567 beteiligt ist.

Aus den Kennungen für Gestaltungselemente wird ermittelt, welche Gestaltungselemente zur Konstruktion des Bauteils 1234567 gehören und zugleich Meßpunkte sind. Für jeden dieser Meßpunkte wird aus den Kennungen aller Messungen ermittelt, zu welchen Messungen mindestens ein Meßpunkt der Konstruktion von 1234567 gehört. Außerdem wird aus den Kennungen aller Messungen ermittelt, welche Messungen der Konstruktion von 1234567 durchgeführt werden. Insgesamt werden alle Messungen ermittelt, in deren Kennung die Kennung für 1234567 enthalten ist.

Die Ergebnisse der Toleranzsimulationen werden ausgewertet, um festzustellen, welche Gestaltungselemente Einfluß auf die so identifizierten Messungen nehmen. Außerdem wird jeweils eine Kennzeichnung für die Stärke eines Einflusses ermittelt, z. B. der oben beschriebene Gewichtsfaktor. Vorteilhafterweise werden die Gestaltungselemente absteigend nach der Größe des Einflusses auf die Messung an 1234567 sortiert. Die Kennungen dieser Gestaltungselemente werden wiederum ausgewertet, um automatisch die Teil-Objekte zu ermitteln, zu deren Konstruktionen die Gestaltungselemente gehören. Damit ist ermittelt, welche Gestaltungselemente an welchen Teil-Objekte welchen Einfluß auf eine Messung an 1234567 und damit auf 1234567 selbst nehmen.

Für jede Messung MES werden weitere Informationen erzeugt. Die Ergebnisse der Toleranzsimulation werden ausgewertet, um Mittelwert, Streuung und weitere statistische Informationen über die Messung zu gewinnen. Zu diesen statistischen Informationen zählen Charakterisierungen der Prozeßsicherheit für MES; der Fachmann kennt den Cp- und den Cpk-Wert. Der Kennung von MES wird die Information entnommen, zu welchen Teil-Objekten die Meßpunkte von MES gehören. Der Baumstruktur für die Fügereihenfolge wird die Information entnommen, wo diese Teil-Objekte in der Fügereihenfolge auftreten, und damit die Information, wann diese Messung durchgeführt wird. Aus CAD-Modellen dieser Teil-Objekte werden graphische Darstellungen der Teil-Objekte und Gestaltungselemente gewonnen.

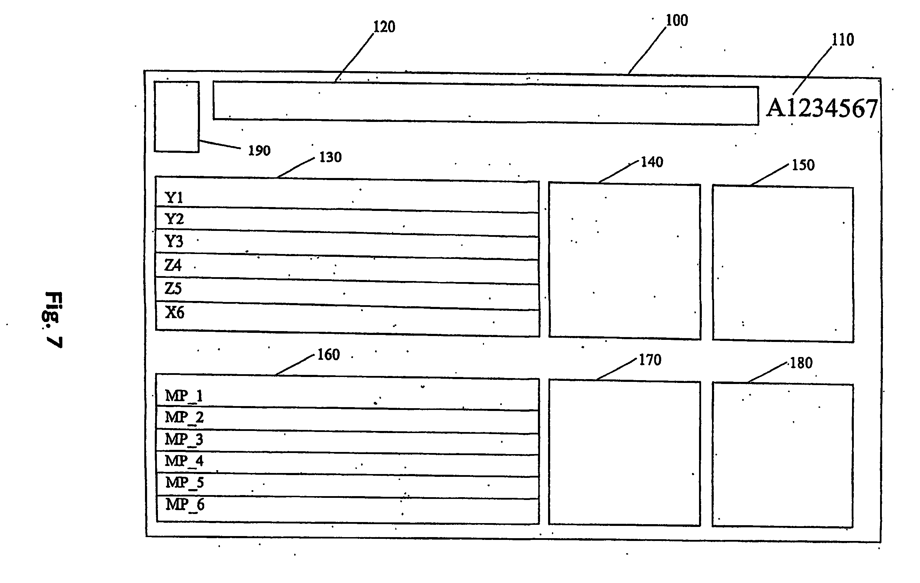

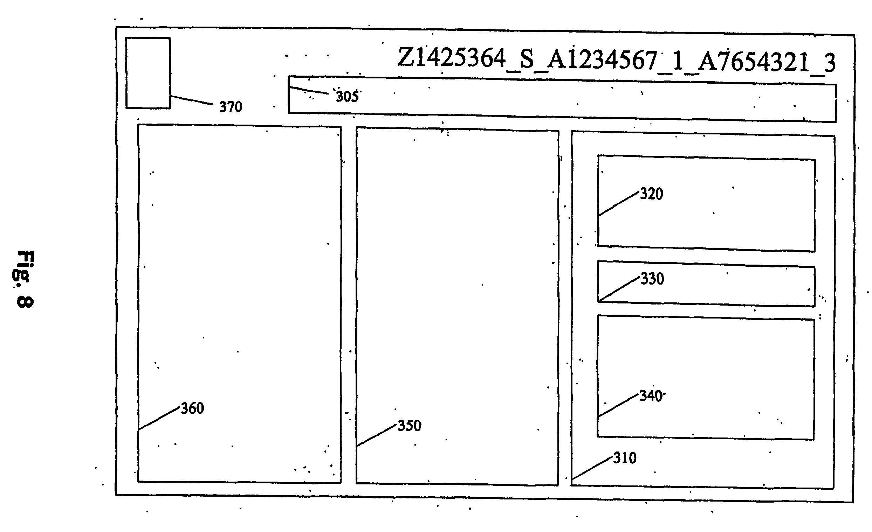

Eine weitere Ausgestaltung der Erfindung sieht vor, eine kompakte Darstellung für die erzeugten Informationen über ein Teil-Objekt und eine für ein Gestaltungselement automatisch zu erzeugen und bereitzustellen. Dies wird anhand der Fig. 7. für ein Bauteil und der Fig. 8. für eine Messung erläutert. Vorzugsweise werden einmal vorab wiederverwendbare Vorlagen für die Dokumentationen erzeugt. Vorzugsweise wird diese Vorlage mit den erfindungsgemäß erzeugten und bei Bedarf weiteren Informationen über das erste Bauteil einschließlich des ersten Referenzelements gefüllt. Vorzugsweise werden in diesen Dokumentationen alle Teil-Objekte und Gestaltungselemente durch die erfinderischen Gesamt-Kennungen bezeichnet.

Fig. 7. zeigt die Darstellung 100 der Informationen für das Bauteil mit der Sachnummer 1234567. Oben rechts wird die Kennung 110 des Bauteils dargestellt, oben links Verwaltungsinformationen 120 für das Bauteil. Zu diesen Verwaltungsinformationen zählen eine Bezeichnung des Bauteils, Benennungen von Funktionsgruppe, von Verantwortlichen und ein Datum.

In den Blöcken 130, 140 und 150 werden Informationen über die Bezugspunkte von 1234567, die beispielsweise für die Erzeugung eines Spann- und Fixierkonzept verwendet werden, dargestellt. Die drei Blöcke sind jeweils in sechs Zeilen unterteilt, eine pro Bezugspunkt. Im Block 130 wird dargestellt, welche Richtung der räumlichen Bewegung von 1234567 der Bezugspunkt einschränkt, und außerdem die x-, y- und z-Koordinaten des Bezugspunkts, die des Normalenvektors auf der Oberfläche von 1234567 im Bezugspunkt sowie die Toleranz des Bezugspunkt in Bezug auf 1234567. Im Block 140 ist dargestellt, welches Ziel-Objekt für den Bezugspunkt ermittelt wurde und welche Toleranz das Ziel-Objekt in Bezug auf den Bezugspunkt hat. In Block 150 ist dargestellt, auf welche Messungen die Festlegungen für den Bezugspunkt Einfluß nehmen, sowie eine Kennzeichnung der Gewichtung dieses Einflusses. Nur diejenigen Messungen werden in Block 150 genannt, auf die der Bezugspunkt einen kritischen Einfluß nimmt, beispielsweise einen mit einer Gewichtung größer als ein vorgegebener Schwellwert.

In den Blöcken 160, 170 und 180 werden Informationen über die Messungen dargestellt, zu denen ein Meßpunkt an 1234567 gehört. In Block 160 wird eine Kennung des Meßpunktes an 1234567, eine Kennung der Messung und, falls die Messung zwei Meßpunkte besitzt, eine Kennung des zweiten Meßpunktes dargestellt. In Block 170 werden statistische Informationen über die Messung dargestellt, insbesondere Mittelwert, Streuung, Cp-Wert und Cpk-Wert. Im Block 180 werden der größte Einflußfaktor auf die Messung, beschrieben durch eine Kennung des Gestaltungselements, sowie eine Kennzeichnung für die Größe des Einflusses dargestellt.

Der Block 190 hat die Gestalt einer Lichtzeichenanlage (Ampelfunktion), die eine Bewertung für den aktuellen Zustand der Konstruktion des Bauteils im Gesamtsystem visualisiert. In die Bewertung fließen Ergebnisse der Toleranzsimulation ein. Eine auf rot geschaltete Ampel zeigt an, dass dieses Bauteil häufig ein Hauptverursacher für unerwünschte Simulationsergebnisse ist und daher einen kritischen Einfluß auf die Konstruktion des gesamten physikalischen Objekts hat.

Fig. 8. zeigt die Darstellung 300 der Informationen für eine Messung mit der Kennung Z1425364_S_A1234567_1_A7654321_3.

Im Block 305 werden Verwaltungsinformationen für die Messung angezeigt. Hierzu zählen die Meßpunkte, die zur Messung gehören, die Kennungen der Teil-Objekte, zu deren Konstruktionen diese Meßpunkte gehören (hier: A1234567 und A7654321), sowie das Teil-Objekt, dessen Konstruktion die Messung zugeordnet ist (hier: Z1425364). Darüber hinaus wird eine textliche Beschreibung der Messung angezeigt.

Im Block 310 werden diejenigen Ergebnisse einer Toleranzsimulation, welche die Messung Z1425364_S_A1234567_1_A7654321_3 betreffen, dargestellt. Gezeigt werden ein Histogramm 320 für die Streuung der Messung über ihrem Wertebereich sowie ein Teilblock 330 mit statistischen Aussagen über die Messung, z. B. Mittelwert, Median, Standardabweichung, cp- und cpk-Wert und Konfidenzintervall für den Anteil der Messungen, der innerhalb einer vorgegebenen Toleranz liegt.

Im Teilblock 340 werden die Einflußfaktoren auf die Messung Z1425364_S_A1234567_1_A7654321_3 gezeigt, und zwar vorzugsweise absteigend nach Stärke des Einflusses auf die Messung. Jeder Einflußfaktor ist ein Gestaltungselement, das durch seine erfinderische Gesamt-Kennung bezeichnet wird. Diese Gesamt-Kennung umfaßt die Art des Gestaltungselements, das zugehörende Teil-Objekt und - falls vorhanden - einen Verweis auf kompatible Gestaltungselemente. Außerdem werden die Größe des Einflusses (z. B. in Form des maximal möglichen Einflusses auf die Streuung) und - falls vorgegeben - die Toleranz angegeben. Die Größen dieser Einflüsse werden durch Balken veranschaulicht.

Im Block 350 ist ein Ausschnitt aus der Fügereihenfolge dargestellt. Dieser Ausschnitt umfaßt die Kennungen der Teil-Objekte, zu deren Konstruktionen die Meßpunkte der Messung gehören (hier: A1234567 und A7654321). Im Block 360 wird eine graphische Darstellung der Konstruktionen der Teil-Objekte, zu denen die Meßpunkte der Messung gehören (hier: A1234567 und A7654321) gezeigt.

Der Block 370 hat die Gestalt einer Lichtzeichenanlage (Ampelfunktion), die veranschaulicht, zu welchem Grade diejenigen Ergebnisse der Toleranzsimulation, welche die Messung betreffen, mit den Vorgaben für die Messung übereinstimmen.

Die automatisch ermittelten Unterschiede und Auswirkungen werden, so eine weitere Ausgestaltung, mit dem Ziel ausgewertet, Nachrichten zu erzeugen und zu versenden, mit denen Konstrukteure von anderen Bauteilen benachrichtigt werden, wenn die Streuung eines Gestaltungselements, das zur Konstruktion eines Bauteils 1234567 gehört, einen vorgegebenen Wert für die Toleranz übersteigt. Hierzu wird eine vorab definierte Entscheidungsvorschrift ausgewertet. Eine Ausgestaltung der Entscheidungsvorschrift ist die, dass der Konstrukteur eines Bauteils 7654321 benachrichtigt wird, wenn zu MES ein Gestaltungselement der Konstruktion von 7654321 gehört, dessen Streuung, Standardabweichung oder ein anderes Maß für die Streuung der Simulationsergebnisse für MES größer als die vorgegebene Toleranz ist. Der Konstrukteur von 1234567 wird durch eine automatisch erzeugte und versandte Nachricht darüber informiert, dass die Streuung von MES die vorgegebene Toleranz übersteigt und dass der Konstrukteur von 7654321 davon benachrichtigt wurde.

Diese Nachrichten werden vorzugsweise als E-Mails versandt. Eine Datenverarbeitungsanlage hat Lesezugriff auf die erfindungsgemäß ermittelten Unterschiede und Auswirkungen sowie auf eine elektronische Tabelle, die für jedes Bauteil die E-Mail-Adresse des für dieses Bauteil verantwortlichen Konstrukteurs enthält.

### Bezugszeichenliste

| Zeichen | Bedeutung |
|---|---|
| 10 | Primärebene (1. Bezugsebene) |
| 11,12,13 | drei Referenzpunkte der Primärebene |
| 20 | Sekundärebene (2. Bezugsebene) |
| 21,22 | zwei Referenzpunkte der Sekundärebene |
| 30 | Tertiärebene |
| 31 | ein Referenzpunkt der Tertiärebene |
| 40 | toleranzbehaftetes Profil einer Fläche |
| 41 | toleranzbehaftete Position |
| 50 | eine Vorrichtung |
| 51,52 | zwei Bauteile |
| 53 | ein Zusammenbau |
| 100 | Informationsdarstellung für das Bauteil A1234567 |
| 110 | Darstellung der Kennung eines Bauteils |
| 120 | Verwaltungsinformationen für ein Bauteil |
| 130 | Darstellung der räumlichen Bewegung, die ein Bezugspunkt einschränkt |
| 140 | Ziel-Objekte für die Bezugspunkte |
| 150 | Messungen, auf die die Bezugspunkte Einfluß nehmen |
| 160 | Kennungen eines Meßpunktes am Bauteil und Verwaltungsinformationen |
| 170 | Statistische Informationen über eine Messung |
| 180 | Einflußfaktoren auf die Messung |
| 190 | Ampelfunktion zur Bewertung des Bauteils |
| 200 | eine Vorrichtung |
| 210, 220 | zwei aufnehmende Bauteile |
| 230 | ein aufgenommenes Bauteil |
| 240 | Zusammenbau aus 210, 220, 230 |
| 300 | Informationsdarstellung für die Messung Z1425364 S A1234567 1 A7654321 3 |
| 305 | Verwaltungsinformationen für die Messung |
| 310 | Ergebnisdarstellung einer Toleranzsimulation für die Messung |
| 320 | Histogramm für die Streuung einer Messung |
| 330 | Block mit statistischen Aussagen über die Messung |
| 340 | Einflußfaktoren auf die Messung |
| 350 | Ausschnitt aus einer Fügereihenfolge |
| 360 | graphische Darstellung der Konstruktionen der Teil-Objekte, zu denen die Meßpunkte der Messung gehören |
| 370 | Ampelfunktion zur Bewertung der Messung |

## Patentansprüche

1. Verfahren zum Auswählen von weiteren Teil-Objekten eines physikalischen Objekts, auf deren Konstruktionen sich Festlegungen für ein erstes Referenzelement an einem ersten Teil-Objekt des physikalischen Objekts auswirken, wobei
- die Auswahl automatisch von einer Datenverarbeitungsanlage durchgeführt wird,
- die Konstruktion des physikalischen Objekts Konstruktionen des ersten Teil-Objekts und mindestens eines weiteren Teil-Objekts umfaßt,
- die Konstruktion jedes dieser Teil-Objekte die räumliche Ausdehnung und die räumliche Lage des Teil-Objekts umfaßt,
- die Konstruktion des ersten Teil-Objekts das erste Referenzelement umfaßt,
- für das erste Referenzelement die räumliche Lage sowie die Richtung, in welcher das Referenzelement die räumliche Bewegung des ersten Teil-Objekts einschränkt, festgelegt sind,
- und eine Fügereihenfolge festgelegt ist, in der das erste Teil-Objekt enthalten ist,
mit den Schritten
a) für jedes weitere Teil-Objekt, das in der Fügereihenfolge nach dem ersten Teil-Objekt auftritt, Durchführen der Schritte b) und c) mit
b) Prüfen, ob das weitere Teil-Objekt das erste Teil-Objekt im ersten Referenzelement aufnimmt und/oder fixiert, wobei bei der Prüfung
- die räumliche Lage des ersten Referenzelement mit der räumlichen Ausdehnung und Lage des weiteren Teil-Objekts
- und die durch das erste Referenzelement eingeschränkte Richtung mit der räumlichen Orientierung des weiteren Teil-Objekts
verglichen werden, und
c) Auswählen des weiteren Teil-Objekts, falls kein Vergleich einen Unterschied liefert, der größer als eine vorgegebene Schranke ist.

2. Verfahren zum Auswählen von weiteren Teil-Objekten eines physikalischen Objekts, auf deren Konstruktionen Festlegungen für ein erstes Referenzelement an einem ersten Teil-Objekt des physikalischen Objekts sich auswirken, wobei
- die Auswahl automatisch von einer Datenverarbeitungsanlage durchgeführt wird,
- die Konstruktion des physikalischen Objekts Konstruktionen des ersten Teil-Objekts und mindestens eines weiteren Teil-Objekts umfaßt,
- die Konstruktion jedes dieser Teil-Objekte die räumliche Ausdehnung und die räumliche Lage des Teil-Objekts umfaßt,
- die Konstruktion jedes Teil-Objekts mindestens ein Gestaltungselement umfaßt oder um mindestens ein Gestaltungselement erweiterbar ist,
- die Konstruktion des ersten Teil-Objekts das erste Referenzelement umfaßt,
- für jedes Referenzelement Geometrie-Informationen festgelegt sind, welche die räumliche Lage des Referenzelements umfassen,
- und eine Fügereihenfolge festgelegt ist, in der das erste Teil-Objekt enthalten ist,
mit den Schritten
a) für jedes weitere Teil-Objekt, das in der Fügereihenfolge nach dem ersten Teil-Objekt auftritt, Durchführen der Schritte b) und c) mit
b) Prüfen, ob das weitere Teil-Objekt das erste Teil-Objekt im ersten Referenzelement aufnimmt und/oder fixiert, wobei bei der Prüfung
- geprüft wird, ob die Konstruktion des weiteren Teil-Objekts ein Referenzelement umfaßt, das mit dem ersten Referenzelement kompatibel ist,
- wobei Geometrie-Informationen des ersten Referenzelements mit Geometrie-Informationen mindestens eines weiteren Referenzelements am weiteren Teil-Objekt verglichen werden und entschieden wird, ob Kompatibilität zwischen dem ersten und dem weiteren Referenzelement vorliegt, und
c) Auswählen des weiteren Teil-Objekts, falls ein kompatibles Referenzelement am weiteren Teil-Objekt gefunden wird.

3. Verfahren nach Anspruch 2,
**dadurch gekennzeichnet, dass**
die für eine Prüfung verwendeten Geometrie-Eigenschaften für jedes Referenzelement mindestens eine der folgenden Informationen umfassen:
- ob das Gestaltungselement
- ein Bezugspunkt eines Teil-Objekts und / oder
- ein Aufnahmepunkt eines Teil-Objekts und / oder
- eine Bezugsfläche eines Teil-Objekts und / oder
- eine Aufnahmefläche eines Teil-Objekts ist,
- die Richtung, in der das Referenzelement die räumliche Bewegung desjenigen Teil-Objekts, zu dessen Konstruktion das Referenzelement gehört, einschränkt,
- eine Form-, Lage- oder Maßtoleranz für das Referenzelement.

4. Verfahren nach Anspruch 2 oder Anspruch 3,
**dadurch gekennzeichnet, dass**
dann, wenn sowohl das erste als auch das weitere Referenzelement Referenzpunkte sind,
ein Normalenvektor auf der Oberfläche des ersten Teil-Objekts im ersten Referenzpunkt und ein Normalenvektor auf der Oberfläche des weiteren Teil-Objekts im weiteren Referenzpunkt ermittelt werden,
dann, wenn sowohl das erste als auch das weitere Referenzelement Referenzflächen sind,
ein Normalenvektor auf der ersten Referenzfläche und ein Normalenvektor auf der weiteren Referenzfläche ermittelt werden,
und dann, wenn die beiden Normalenvektoren nicht übereinstimmen, entschieden wird, dass keine Kompatibilität zwischen dem ersten und dem weiteren Referenzelement vorliegt.

5. Verfahren nach einem der Ansprüche 2 bis 4,
**dadurch gekennzeichnet, dass**
dann, wenn Kompatibilität zwischen dem ersten und dem weiteren Referenzelement vorliegt,
das erste Referenzelement durch eine Gesamt-Kennung **gekennzeichnet** wird,
- die eine Kennung, die das weitere Teil-Objekt **kennzeichnet,**
- eine Kennung, die das weitere Referenzelement von anderen Referenzelementen des weiteren Teil-Objekt unterscheidet
- und eine Kennung für die Art des weiteren Referenzelements
umfaßt.

6. Verfahren nach einem der Ansprüche 2 bis 5,
**dadurch gekennzeichnet, dass**
dann, wenn Kompatibilität zwischen dem ersten und dem weiteren Referenzelement vorliegt,
das weitere Referenzelement durch eine Gesamt-Kennung **gekennzeichnet** wird,
- die eine Kennung, die das erste Teil-Objekt **kennzeichnet,**
- eine Kennung, die das erste Referenzelement von anderen Referenzelementen des ersten Teil-Objekt unterscheidet
- und eine Kennung für die Art des ersten Referenzelements
umfaßt.

7. Verfahren nach Anspruch 6,
**dadurch gekennzeichnet, dass**
- das Verfahren mehrmals durchgeführt wird,
- bei einer Durchführung die Gesamt-Kennung des weiteren Referenzelements erzeugt wird
- und bei dieser und / oder einer nachfolgenden Durchführung nur dann die Kompatibilität eines weiteren mit dem ersten Referenzelement geprüft wird, wenn die Gesamt-Kennung des weiteren Referenzelements
- eine Kennung des ersten Teil-Objekts,
- eine Kennung, die das erste Referenzelement von anderen Referenzelementen der Konstruktion des ersten Teil-Objekts unterscheidet,
- und eine Kennung für die Art des ersten Referenzelements
umfaßt.

8. Verfahren nach einem der Ansprüche 1 bis 7,
**dadurch gekennzeichnet, dass**
das erste Referenzelement durch eine Gesamt-Kennung **gekennzeichnet** wird, die
- eine Kennung des ersten Teil-Objekts,
- eine Kennung, die das erste Referenzelement von anderen Referenzelementen der Konstruktion des ersten Teil-Objekts unterscheidet,
- und eine Kennung für die Art des ersten Referenzelements umfaßt,
und dann, wenn ein weiteres Teil-Objekt ausgewählt wurde und in der Fügereihenfolge zwischen dem ersten und dem weiteren Teil-Objekt kein anderes ausgewähltes Teil-Objekt auftritt,
die Gesamt-Kennung des ersten Referenzelements um eine Kennung, die das ausgewählte weitere Teil-Objekt **kennzeichnet,** erweitert wird.

9. Verfahren nach Anspruch 5 oder Anspruch 8,
**dadurch gekennzeichnet, dass**
- das Verfahren mehrmals durchgeführt wird,
- bei einer Durchführung die Gesamt-Kennung des ersten Referenzelements erzeugt wird
- und bei dieser und / oder einer nachfolgenden Durchführung die Prüfung, ob das weitere Teil-Objekt das erste Teil-Objekt im ersten Referenzelement aufnimmt und/oder fixiert, nur für diejenigen weiteren Teil-Objekte durchgeführt wird, deren Kennungen in der Gesamt-Kennung des ersten Referenzelements enthalten sind.

10. Verfahren nach einem der Ansprüche 1 bis 9,
**dadurch gekennzeichnet, dass**
dann, wenn ein weiteres Teil-Objekt ausgewählt wurde,
- entweder ein weiteres Referenzelement erzeugt wird, das zur Konstruktion des ausgewählten Teil-Objekts gehört und mit dem ersten Referenzelement kompatibel ist, wobei das weitere Referenzelement eine Kennung und die räumliche Lage relativ zum ausgewählten Teil-Objekt umfaßt,
- oder festgestellt wird, dass ein kompatibles weiteres Referenzelement nicht erzeugt werden kann.

11. Verfahren nach Anspruch 10,
**dadurch gekennzeichnet, dass**
- das erste und das weitere Referenzelement entweder beides Referenzpunkte oder beides Referenzflächen sind und
- das erste und das weitere Referenzelement hinsichtlich
- ihrer räumlichen Lagen,
- des Normalenvektor auf der Oberfläche des jeweiligen Teil-Objekts bzw. der jeweiligen Referenzfläche,
- der Richtung, in der die räumliche Bewegung des jeweiligen Teil-Objekts eingeschränkt wird,
- und / oder der Art des Referenzelements übereinstimmen.

12. Computerprogramm-Produkt, das direkt in den internen Speicher eines Computers geladen werden kann und Softwareabschnitte umfaßt, mit denen ein Verfahren nach einem der Ansprüche 1 bis 11 ausgeführt werden kann, wenn das Produkt auf einem Computer läuft.

13. Computerprogramm-Produkt, das auf einem von einem Computer lesbaren Medium gespeichert ist und das von einem Computer lesbare Programm-Mittel aufweist, die den Computer veranlassen, ein Verfahren nach einem der Ansprüche 1 bis 11 auszuführen.

## Claims

1. Method for selecting further partial objects of a physical object, the designs of which are affected by definitions for a first reference element on a first partial object of the physical object, wherein
- the selection is carried out automatically by a data processing system,
- the design of the physical object comprises designs of the first partial object and at least of a further partial object,
- the design of each of these partial objects comprises the spatial extent and the spatial position of the partial object,
- the design of the first partial object comprises the first reference element,
- for the first reference element, the spatial position and the direction, in which the reference element restricts the spatial movement of the first partial object, are defined,
- and an assembly sequence, in which the first partial object is contained, is defined,
comprising the steps
a) for each further partial object that occurs after the first partial object in the assembly sequence, executing steps b) and c) comprising
b) testing whether the further partial object receives and/or secures the first partial object in the first reference element, in which case, during the test
- the spatial position of the first reference element is compared with the spatial extent and position of the further partial object
- and the direction which is restricted by the first reference element is compared with the spatial orientation of the further partial object, and
c) selecting the further partial object, if no comparison provides a difference which is greater than a predefined limit.

2. Method for selecting further partial objects of a physical object, the designs of which are affected by definitions for a first reference element on a first partial object of the physical object, wherein
- the selection is carried out automatically by a data processing system,
- the design of the physical object comprises designs of the first partial object and at least one further partial object,
- the design of each of these partial objects comprises the spatial extent and the spatial position of the partial object,
- the design of each partial object comprises at least one design element or is expandable by at least one design element,
- the design of the first partial object comprises the first reference element,
- for each reference element, geometric information is defined, which comprises the spatial position of the reference element,
- and an assembly sequence is defined in which the first partial object is contained,
comprising the steps
a) for each further partial object that occurs after the first partial object in the assembly sequence, executing steps b) and c) comprising
b) testing whether the further partial object receives and/or secures the first partial object in the first reference element, in which case, during the testing
- a test is made whether the design of the further partial object comprises a reference element that is compatible with the first reference element,
- geometric information of the first reference element is compared with geometric information of at least one further reference element on the further partial object and a decision is made whether there is compatibility between the first and the further reference element, and
c) selecting the further partial object, if a compatible reference element is found on the further partial object.

3. Method according to claim 2, **characterised in that** the geometric properties used for a test comprise, for each reference element, at least one of the following information items:
- whether the design element
- is a reference point of a partial object and/or
- a receiving point of a partial object and/or
- a reference surface of a partial object and/or
- a receiving surface of a partial object,
- the direction, in which the reference element restricts the spatial movement of the partial object, to the design of which the reference element belongs,
- a shape, position or dimension tolerance for the reference element.

4. Method according to claim 2 or claim 3, **characterised in that** when both the first and the further reference element are reference points, a normal vector to the surface of the first partial object in the first reference point and a normal vector to the surface of the further partial object in the further reference point are determined, then if both the first and the further reference element are reference surfaces, a normal vector to the first reference surface and a normal vector to the further reference surface are determined and if the two normal vectors do not correspond, a decision is made that there is no compatibility between the first and the further reference element.

5. Method according to any one of claims 2 to 4, **characterised in that** when there is compatibility between the first and the further reference element, the first reference element is **characterised by** a global identifier,
- which comprises an identifier, which characterises the further partial object,
- an identifier, which distinguishes the further reference element from other reference elements of the further partial object,
- and an identifier for the type of the further reference element.

6. Method according to any one of claims 2 to 5, **characterised in that** when there is compatibility between the first and the further reference element, the further reference element is **characterised by** a global identifier,
- which comprises an identifier, which characterises the first partial object,
- an identifier, which distinguishes the first reference elements from other reference elements of the first partial object,
- and an identifier for the type of the first reference element.

7. Method according to claim 6, **characterised in that**
- the method is carried out a plurality of times,
- when the method is carried out, the global identifier of the further reference element is generated
- and when the method is carried out currently or subsequently, the compatibility of a further reference element with the first reference element is tested only if the global identifier of the further reference element
- comprises an identifier of the first partial object,
- an identifier, which distinguishes the first reference element from other references elements of the design of the first partial object,
- and an identifier for the type of the first reference element.

8. Method according to any one of claims 1 to 7, **characterised in that** the first reference element is **characterised by** a global identifier, which
- comprises an identifier of the first partial object,
- an identifier, which distinguishes the first reference element from other reference elements of the design of the first partial object,
- and an identifier for the type of the first reference element,
and if a further partial object has been selected and no other selected partial object occurs in the assembly sequence between the first partial object and the further partial object, the global identifier of the first reference element is expanded by an identifier, which characterises the selected further partial object.

9. Method according to claim 5 or claim 8, **characterised in that**
- the method is carried out a plurality of times,
- when the method is carried out, the global identifier of the first reference element is generated
- and when the method is carried out currently or subsequently, testing whether the further partial object receives and/or secures the first partial object in the first reference element is carried out only for those further partial objects, the identifiers of which are contained in the global identifier of the first reference element.

10. Method according to any one of claims 1 to 9, **characterised in that** if a further partial object has been selected,
- either a further reference element is generated, which belongs to the design of the selected partial object and is compatible with the first reference element, the further reference element comprising an identifier and the spatial position relative to the selected partial object,
- or it is determined that a compatible further reference element cannot be generated.

11. Method according to claim 10, **characterised in that**
- the first and the further reference element are either both reference points or both reference surfaces and
- the first and the further reference element correspond with respect to
- their spatial positions,
- the normal vector to the surface of the respective partial object or the respective reference surface,
- the direction, in which the spatial movement of the respective partial object is restricted,
- and/or the type of the reference element.

12. Computer programme product, which can be loaded directly into the internal memory of a computer and comprises software sections, with which a method according to any one of claims 1 to 11 can be carried out when the product runs on a computer.

13. Computer programme product, which is stored on a computer-readable medium and has computer-readable programme means which cause the computer to carry out a method according to any one of claims 1 to 11.

## Revendications

1. Procédé de sélection d'objets partiels supplémentaires d'un objet physique, sur la construction desquels des déterminations concernant un premier élément de référence sur un premier objet partiel de l'objet physique se répercutent,
- la sélection étant réalisée de façon automatique par un dispositif de traitement de données,
- la construction de l'objet physique englobant des constructions du premier objet partiel et d'au moins un objet partiel supplémentaire,
- la construction de chacun de ces objets partiels englobant la dimension dans l'espace et la position dans l'espace de l'objet partiel,
- la construction du premier objet partiel englobant le premier élément de référence,
- la position dans l'espace, ainsi que la direction dans laquelle l'élément de référence limite le déplacement du premier objet partiel dans l'espace étant définies pour le premier élément de référence,
- et un ordre chronologique d'assemblage étant déterminé, dans lequel le premier objet partiel est compris,
avec les étapes :
a) pour chaque objet partiel supplémentaire qui se présente dans l'ordre chronologique d'assemblage après le premier objet partiel, réalisation des étapes b) et c), avec
b) contrôle si l'objet partiel supplémentaire réceptionne et/ou fixe le premier objet partiel dans le premier élément de référence,
- la position du premier élément de référence dans l'espace étant comparée avec la dimension dans l'espace et la position dans l'espace de l'objet partiel supplémentaire
- et la direction limitée par le premier élément de référence étant comparée avec l'orientation dans l'espace de l'objet partiel supplémentaire
au cours du contrôle et
c) sélection de l'objet partiel supplémentaire si aucune comparaison ne fournit une différence supérieure à une limite prédéfinie.

2. Procédé de sélection d'objets partiels supplémentaires d'un objet physique, sur la construction desquels des déterminations concernant un premier élément de référence sur un premier objet partiel de l'objet physique se répercutent,
- la sélection étant réalisée de façon automatique par un dispositif de traitement de données,
- la construction de l'objet physique englobant des constructions du premier objet partiel et d'au moins un objet partiel supplémentaire,
- la construction de chacun de ces objets partiels englobant la dimension dans l'espace et la position dans l'espace de l'objet partiel,
- la construction de chaque objet partiel englobant au moins un élément de conception ou pouvant être étendue d'au moins un élément de conception,
- la construction du premier objet partiel englobant le premier élément de référence,
- pour chaque élément de référence, des informations géométriques englobant la position dans l'espace de l'élément de référence étant déterminées,
- et un ordre chronologique de montage étant déterminé, dans lequel le premier objet partiel est compris,
avec les étapes :
a) pour chaque objet partiel supplémentaire qui se présente dans l'ordre chronologique d'assemblage après le premier objet partiel, réalisation des étapes b) et c), avec
b) contrôle si l'objet partiel supplémentaire réceptionne et/ou fixe le premier objet partiel dans le premier élément de référence,
- étant contrôlé au cours du contrôle si la construction de l'objet partiel supplémentaire englobe un élément de référence qui est compatible avec le premier élément de référence,
- des informations géométriques du premier élément de référence étant comparées avec des informations géométriques d'au moins un élément de référence supplémentaire sur l'objet partiel supplémentaire, après quoi on détermine s'il existe une compatibilité entre le premier élément de référence et l'élément de référence supplémentaire, et
c) sélection de l'objet partiel supplémentaire si un élément de référence compatible a été trouvé sur l'objet partiel supplémentaire.

3. Procédé selon la revendication 2,
**caractérisé en ce que**
des caractéristiques géométriques utilisées pour un contrôle englobent au moins l'une des informations suivantes pour chaque élément de référence :
- si l'élément de conception
- est un point de référence d'un objet partiel et/ou
- est un point de réception d'un objet partiel et/ou
- est une surface de référence d'un objet partiel et/ou
- est une surface de réception d'un objet partiel,
- la direction dans laquelle l'élément de référence limite le déplacement de l'objet partiel de la construction duquel l'élément de référence fait partie,
- une tolérance de forme, de position ou de cotes pour l'élément de référence.

4. Procédé selon la revendication 2 ou la revendication 3,
**caractérisé en ce que**
lorsque aussi bien le premier élément de référence que l'élément de référence supplémentaire sont des points de référence,
un vecteur étalon est déterminé sur la surface du premier objet partiel, au premier point de référence et un vecteur étalon est déterminé sur la surface de l'objet partiel supplémentaire, au point de référence supplémentaire,
lorsque aussi bien le premier élément de référence que l'élément de référence supplémentaire sont des surfaces de référence,
un vecteur étalon est déterminé sur la première surface de référence et un vecteur étalon est déterminé sur la surface de référence supplémentaire,
et lorsque les deux vecteurs étalons ne correspondent pas, on décide qu'il n'existe aucune compatibilité entre le premier élément de référence et l'élément de référence supplémentaire.

5. Procédé selon l'une quelconque des revendications 2 à 4,
**caractérisé en ce que**
s'il existe une compatibilité entre le premier élément de référence et l'élément de référence supplémentaire,
le premier élément de référence est **caractérisé par** une identification globale qui englobe
- une identification caractérisant l'objet partiel supplémentaire
- une identification distinguant l'élément de référence supplémentaire d'autres éléments de référence de l'objet partiel supplémentaire,
- et une identification de la nature de l'élément de référence supplémentaire.

6. Procédé selon l'une quelconque des revendications 2 à 5
**caractérisé en ce que**
s'il existe une compatibilité entre le premier élément de référence et l'élément de référence supplémentaire,
l'élément de référence supplémentaire est **caractérisé par** une identification globale qui englobe
- une identification caractérisant le premier objet partiel,
- une identification distinguant le premier élément de référence d'autres éléments de référence du premier objet partiel
- et une identification de la nature du premier élément de référence.

7. Procédé selon la revendication 6,
**caractérisé en ce que**
- le procédé est réalisé plusieurs fois,
- lors d'une réalisation, l'identification globale de l'élément de référence supplémentaire est créée
- et lors de cette réalisation et/ou d'une réalisation suivante, la compatibilité d'un élément de référence supplémentaire avec le premier élément de référence n'est contrôlée que si l'identification globale de l'élément de référence supplémentaire englobe
- une identification du premier objet partiel,
- une identification qui distingue le premier élément de référence des autres éléments de référence de la construction du premier objet partiel,
- et une identification de la nature du premier élément de référence.

8. Procédé selon l'une quelconque des revendications 1 à 7,
**caractérisé en ce que**
le premier élément de référence est **caractérisé par** une identification globale qui englobe
- une identification du premier objet partiel,
- une identification qui distingue le premier élément de référence d'autres éléments de référence de la construction du premier objet partiel,
- et une identification de la nature du premier élément de référence,
et si un objet partiel supplémentaire a été sélectionné et si aucun autre objet partiel sélectionné ne se présente dans l'ordre chronologique de montage entre le premier objet partiel et l'objet partiel supplémentaire,
l'identification globale du premier élément de référence est étendue d'une identification qui **caractérise** l'objet partiel supplémentaire sélectionné.

9. Procédé selon la revendication 5 ou la revendication 8,
**caractérisé en ce que**
- le procédé est réalisé plusieurs fois,
- lors d'une réalisation, l'identification globale du premier élément de référence est créée
- et lors de cette réalisation et/ou d'une réalisation suivante, le contrôle permettant de déterminer si l'objet partiel supplémentaire réceptionne et/ou fixe le premier objet partiel dans le premier élément de référence n'est réalisé que pour les objets partiels supplémentaires dont les identifications son contenues dans l'identification globale du premier élément de référence.

10. Procédé selon l'une quelconque des revendications 1 à 9,
**caractérisé en ce que**
si un objet partiel supplémentaire a été sélectionné
- soit un élément de référence supplémentaire
qui fait partie de la construction de l'objet partiel sélectionné et qui est compatible avec le premier élément de référence est créé,
l'élément de référence supplémentaire englobant une identification et la position dans l'espace par rapport à l'objet partiel sélectionné,
- ou on constate qu'il n'est pas possible de créer un élément de référence supplémentaire compatible.

11. Procédé selon la revendication 10,
**caractérisé en ce que**
- le premier élément de référence et l'élément de référence supplémentaire sont soit tous les deux des points de référence ou sont tous les deux des surfaces de référence et
- le premier élément de référence et l'élément de référence supplémentaire correspondent au niveau :
- de leurs positions dans l'espace
- du vecteur étalon sur la surface de l'objet partiel respectif ou sur la surface de référence respective,
- de la direction dans laquelle le déplacement de l'objet partiel respectif est limité,
- et/ou de la nature de l'élément de référence.

12. Programme informatique, pouvant être chargé directement dans la mémoire interne d'un ordinateur et comprenant des parties de logiciel permettant de réaliser un procédé selon l'une quelconque des revendications 1 à 11, lorsque le programme est exécuté sur l'ordinateur.

13. Programme informatique sauvegardé sur un support lisible par ordinateur et comportant des moyens de programme lisibles par ordinateur, qui incitent l'ordinateur à réaliser un procédé selon l'une quelconque des revendications 1 à 11.
